(19) Europäisches Patentamt
European Patent Office
Office européen des brevets

(11) EP 4 283 530 A1

(12) EUROPEAN PATENT APPLICATION

(43) Date of publication:
**29.11.2023 Bulletin 2023/48**

(21) Application number: **23157869.1**

(22) Date of filing: **21.02.2023**

(51) International Patent Classification (IPC):
***G06N 3/092*** *(2023.01)* ***G06N 3/042*** *(2023.01)*
***G06N 3/045*** *(2023.01)* ***G06N 3/084*** *(2023.01)*
***G06N 5/01*** *(2023.01)* *G06N 7/01 (2023.01)*

(52) Cooperative Patent Classification (CPC):
**G06N 3/092; G06N 3/042; G06N 3/045; G06N 3/084; G06N 5/01;** G06N 7/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.05.2022 JP 2022086041**

(71) Applicant: **Kabushiki Kaisha Toshiba**
**Minato-ku**
**Tokyo 105-0023 (JP)**

(72) Inventors:
- **MINAMOTO, Gaku**
  **Tokyo (JP)**
- **KANEKO, Toshimitsu**
  **Tokyo (JP)**

(74) Representative: **Marks & Clerk LLP**
**15 Fetter Lane**
**London EC4A 1BW (GB)**

# (54) INFORMATION PROCESSING DEVICE, INFORMATION PROCESSING METHOD, AND INFORMATION PROCESSING COMPUTER PROGRAM PRODUCT

(57) An information processing device 10A includes an acquisition unit 40A, a first action-value-function specifying unit 40B, a second action-value-function specifying unit 40C, and an action determination unit 40D. The acquisition unit 40A acquires a current state of a mobile robot 20 as an exemplary device. The first action-value-function specifying unit 40B has functioning of learning a first inference model by reinforcement learning, and specifies a first action-value-function of the mobile robot 20 based on the current state and the first inference model. The second action-value-function specifying unit 40C specifies a second action-value-function of the mobile robot 20 based on the current state and a second inference model that is not a parameter update target. The action determination unit 40D determines a first action of the mobile robot 20 based on the first action-value-function and the second action-value-function.

FIG.2

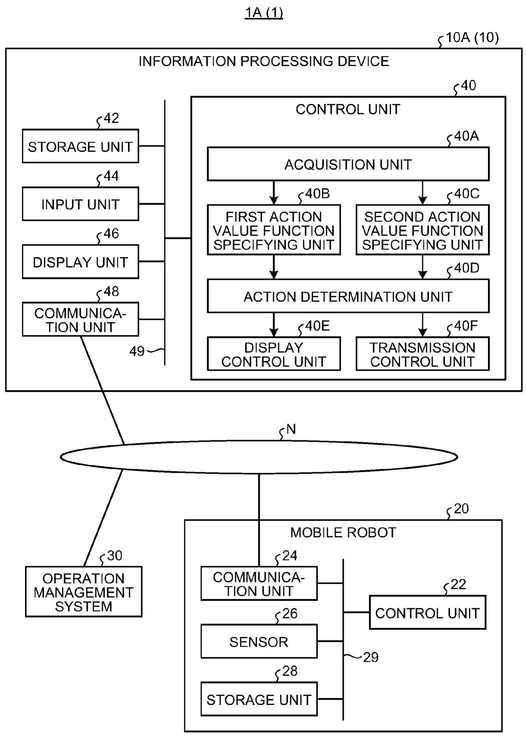


EP 4 283 530 A1

## Description

### FIELD

Arrangements described herein relate generally to an information processing device, an information processing method, and an information processing computer program product.

### BACKGROUND

Action learning using reinforcement learning is performed. In the reinforcement learning, an optimal action of a device is learned by repeating various actions by trial and error. In a case where learning is performed actually using a device such as a robot, the device may fall into an unintended state, and an accident or a failure may occur during the learning. Therefore, it is required to secure safety during the learning.

For example, a method is disclosed by which a framework of a safety operation is determined based on rules, and action parameters are determined by reinforcement learning within the determined framework. In addition, a method is proposed by which a control amount generated by a learning-based algorithm is corrected so as not to deviate from a control amount generated based on rules.

However, a random action search is performed at the time of the reinforcement learning in the framework. As such, in the related art, a performance immediately after the start of learning is low, and it takes time to reach necessary performance. Therefore, by the related art, it is difficult to learn the action of the device by the reinforcement learning while being applied to the device.

### BRIEF DESCRIPTION OF THE DRAWINGS

FIG. 1 is an explanatory diagram of an information processing system;
FIG. 2 is a functional block diagram of the information processing system;
FIG. 3A is a schematic diagram of a first action value function at an initial learning stage;
FIG. 3B is a schematic diagram of a second action value function;
FIG. 4 is an explanatory diagram of transition of a first selection probability and a second selection probability;
FIG. 5 is a schematic diagram of the display screen;
FIG. 6 is a schematic diagram of the display screen;
FIG. 7 is a schematic diagram of the display screen;
FIG. 8 is a flowchart of a flow of information processing executed by the information processing device;
FIG. 9 is a flowchart of a flow of information processing executed by a mobile robot;
FIG. 10 is an explanatory diagram of reward lines;
FIG. 11 is a functional block diagram of the information processing system;
FIG. 12A is a schematic diagram of the first action value function at the initial learning stage;
FIG. 12B is a schematic diagram of the second action value function at the initial learning stage;
FIG. 12C is a schematic diagram of a relationship between the third action value function, the first action value function, and the second action value function at the initial learning stage;
FIG. 13A is a schematic diagram of the first action value function at a learning progress stage;
FIG. 13B is a schematic diagram of the second action value function at the learning progress stage;
FIG. 13C is a schematic diagram of a relationship between the third action value function, the first action value function, and the second action value function at the learning progress stage;
FIG. 14 is a schematic diagram of the display screen;
FIG. 15 is a schematic diagram of the display screen;
FIG. 16 is a flowchart of a flow of the information processing executed by the information processing device;
FIG. 17 is a functional block diagram of the information processing system;
FIG. 18 is a schematic diagram of the display screen;
FIG. 19A is a schematic diagram of the first action value function at the initial learning stage;
FIG. 19B is a schematic diagram of the second action value function at the initial learning stage;
FIG. 19C is an explanatory diagram of a relationship between the first action value function and a fourth action value function;
FIG. 19D is an explanatory diagram for specifying the third action value function;
FIG. 20 is a flowchart of the flow of the information processing executed by the information processing device; and
FIG. 21 is a hardware configuration diagram.

DETAILED DESCRIPTION

Arrangements herein are made in view of the above, and an object thereof is to provide an information processing device, an information processing method, and an information processing computer program product capable of performing reinforcement learning while being applied to a device.

Hereinafter, arrangements of an information processing device, an information processing method, and an information processing computer program product will be described in detail with reference to the accompanying drawings.

First arrangement

FIG. 1 is an explanatory diagram illustrating an example of an information processing system 1 of this arrangement.

The information processing system 1 includes an information processing device 10A, a mobile robot 20, and an operation management system 30. An information processing device 10, the mobile robot 20, and the operation management system 30 are connected to be communicable with each other in a wireless or wired manner.

The information processing device 10A is an example of the information processing device 10. The information processing device 10 is an information processing device that learns an action of the mobile robot 20 by reinforcement learning.

The mobile robot 20 is an example of a device. The device is a device that executes an action learned by the information processing device 10. The action may also be referred to as an operation. The device is a movable body for which at least a part of mechanism operates. The device operates by being controlled by a computer. At least a part of the mechanism of the movable body may operate, and the movable body may be either in a mode that the position of the main body of the movable body moves or in a mode that the position of the main body of the movable body is fixed without moving. Examples of the device include a work robot having a manipulator, a mobile robot having a position moving mechanism, an automobile, a ship, and a flying object. Specifically, the automobile is an autonomous driving vehicle that autonomously travels. The flying object is, for example, a drone.

In this arrangement, a mode that the device is the mobile robot 20 will be described as an example.

The mobile robot 20 has, for example, a predetermined function. FIG. 1 illustrates an example in which the mobile robot 20 has a carrying function of carrying a load or the like while autonomously moving in a predetermined area such as a factory or a warehouse. For example, the mobile robot 20 autonomously moves from a departure point A toward a destination point B. The departure point A is a standby place of the mobile robot 20 or the like. The destination point B is a storage place of the load to be carried or the like.

The departure point information indicating the departure point A and the destination point information indicating the destination point B are transmitted from the operation management system 30 to the mobile robot 20, for example. The operation management system 30 is an information processing device that manages the operation of the mobile robot 20.

There are, for example, various obstacles C and entry prohibition areas D between the departure point A and the destination point B. The obstacle C is an obstacle to the movement of the mobile robot 20. The obstacle C is, for example, another mobile robot, a wall, a shelf, a door, a person, or the like. The entry prohibition area D is an area where the entry of the mobile robot 20 is prohibited. The mobile robot 20 needs to safely and efficiently move in a travelable area E while avoiding collision with the obstacle C and avoiding entry into the entry prohibition area D.

The information processing device 10A learns the action of the mobile robot 20 by reinforcement learning. The information processing device 10A of this arrangement learns the action of the mobile robot 20 by reinforcement learning while applying the mobile robot 20, which is an actual machine, to the site instead of learning in advance.

FIG. 2 is a functional block diagram of an example of an information processing system 1A. The information processing system 1A is an example of the information processing system 1.

The information processing system 1 includes an information processing device 10A, a mobile robot 20, and an operation management system 30. The information processing device 10A, the mobile robot 20, and the operation management system 30 are communicably connected via a network N or the like.

The mobile robot 20 includes a control unit 22, a communication unit 24, a sensor 26, and a storage unit 28. The control unit 22, the communication unit 24, the sensor 26, and the storage unit 28 are communicably connected via a bus 29 or the like.

The control unit 22 executes information processing in the mobile robot 20. The control unit 22 controls the action of the mobile robot 20. The communication unit 24 is a communication interface that communicates with the information processing device 10A and the operation management system 30 via the network N or the like.

The sensor 26 detects the mobile robot 20 and the surrounding environment of the mobile robot 20. In this arrangement, the sensor 26 detects the position information, vehicle speed information, acceleration information, and environment information of the mobile robot 20 and the like. The environment information is information indicating a state around the mobile robot 20. The environment information is, for example, information indicating a captured image around the mobile robot 20, a detection result of an object such as the obstacle C around the mobile robot 20, and the like.

It is sufficient that the sensor 26 is a sensor capable of detecting the mobile robot 20 and the surrounding environment of the mobile robot 20. The sensor 26 is, for example, a camera, a radar device, a laser range finder, a vehicle speed sensor, an acceleration sensor, or the like.

It is sufficient that the sensor 26 can detect the mobile robot 20 and the surrounding environment of the mobile robot 20, and the arrangement position and the number of arrangements are not limited. Furthermore, the sensor 26 may be mounted outside the mobile robot 20. For example, the sensor 26 may be installed in a movement environment where the mobile robot 20 moves. Furthermore, the sensor 26 may be installed in both the mobile robot 20 and the movement environment of the mobile robot 20.

The control unit 22 transmits the detection result of the sensor 26 to the information processing device 10A. In this arrangement, the control unit 22 transmits the detection result of the sensor 26 to the information processing device 10A every predetermined time. That is, the control unit 22 of the mobile robot 20 sequentially transmits detection results continuous in time series to the information processing device 10A.

The storage unit 28 stores various types of data. The storage unit 28 is, for example, a random access memory (RAM), a semiconductor memory element such as a flash memory, a hard disk, an optical disk, or the like.

The operation management system 30 is an information processing device that manages the operation of the mobile robot 20. In this arrangement, the operation management system 30 transmits map information to the mobile robot 20. Incidentally, the operation management system 30 may transmit the map information to both the mobile robot 20 and the information processing device 10A.

The map information includes departure point information, destination point information, entry prohibition area information, travelable area information, obstacle information, and the like. The departure point information is information indicating the departure point. The destination point information is information indicating the destination point. The entry prohibition area information is information indicating the entry prohibition area. The travelable area information is information indicating a travelable area where the mobile robot 20 can travel. Specifically, the departure point information, the destination point information, the entry prohibition area information, and the travelable area information are information respectively representing the departure point A, the destination point B, the entry prohibition area D, and the travelable area E in FIG. 1.

The obstacle information is information indicating the obstacle C. In this arrangement, the obstacle information included in the map information is information indicating the obstacle C having a low possibility of movement or a low frequency of movement. The obstacle C having a low possibility of movement or a low frequency of movement is, for example, a wall, a shelf, a door, or the like.

The information processing device 10A includes a control unit 40, a storage unit 42, an input unit 44, a display unit 46, and a communication unit 48. The control unit 40, the storage unit 42, the input unit 44, the display unit 46, and the communication unit 48 are communicably connected via a bus 49 or the like.

The storage unit 42 stores various types of data. The storage unit 42 is, for example, a RAM, a semiconductor memory element such as a flash memory, a hard disk, an optical disk, or the like. Incidentally, the storage unit 42 may be a storage device provided outside the information processing device 10A. Furthermore, the storage unit 42 may be a storage medium in which programs and various types of information are downloaded via a local area network (LAN), the Internet, or the like and stored or temporarily stored.

The input unit 44 receives various operations by a user. The input unit 44 is, for example, a keyboard, a pointing device such as a mouse, a microphone, or the like.

The display unit 46 displays various types of information. The display unit 46 displays, for example, settings related to the mobile robot 20, a state of the mobile robot 20, a work status by the mobile robot 20, and the like.

The display unit 46 and the input unit 44 may be integrally configured as a touch panel. Furthermore, the input unit 44 and the display unit 46 may be configured separately from an information processing device 10B. In this case, it is sufficient that the input unit 44 and the display unit 46 may be configured to be communicably connected to the information processing device 10B.

The communication unit 48 is a communication interface that communicates with the mobile robot 20 and the operation management system 30 via the network N or the like.

At least one of the storage unit 42 and the control unit 40 may be configured to be mounted on an external information processing device such as a server device connected via the network N and the communication unit 48. Furthermore, at least one of functional units to be described later included in the control unit 40 may be mounted on an external information processing device such as a server device connected to the control unit 40 via the network N and the communication unit 48.

The control unit 40 executes various types of information processing in the information processing device 10A.

The control unit 40 includes an acquisition unit 40A, a first action value function specifying unit 40B, a second action value function specifying unit 40C, an action determination unit 40D, a display control unit 40E, and a transmission control unit 40F.

The acquisition unit 40A, the first action value function specifying unit 40B, the second action value function specifying unit 40C, the action determination unit 40D, the display control unit 40E, and the transmission control unit 40F are realized by one or more processors. For example, each of the above units may be realized by causing a processor such as a central processing unit (CPU) to execute a program, that is, by software. Each of the above units may be realized by a processor such as a dedicated IC, that is, by hardware. Each of the above units may be realized by using software and hardware together. In a case where a plurality of processors are used, each processor may realize one of the units, or may realize two or more of the units.

The acquisition unit 40A acquires the current state of the mobile robot 20. The acquisition unit 40A acquires the current state of the mobile robot 20 by using the detection result of the sensor 26 received from the mobile robot 20 and the map information received from the operation management system 30. Incidentally, the acquisition unit 40A may receive the map information from the mobile robot 20.

The current state of the mobile robot 20 is the current state information of the mobile robot 20. The state information includes the state information of the main body of the mobile robot 20, the state information of surrounding obstacles, and the map information.

The state information of the main body of the mobile robot 20 is information indicating the state of the main body of the mobile robot 20. The state information of the main body of the mobile robot 20 is, for example, the position information, vehicle speed information, and acceleration information of the mobile robot 20, and the like.

For example, the acquisition unit 40A acquires the position information of the mobile robot 20 by analyzing the captured images of a plurality of cameras included in the detection result acquired from the mobile robot 20. For example, the acquisition unit 40A specifies the position coordinates of the mobile robot 20 by analyzing the captured images of the mobile robot 20 captured by a plurality of sensors 26 installed in the movement environment of the mobile robot 20. Further, the acquisition unit 40A acquires the specified position coordinates as position information of the mobile robot 20.

For example, the acquisition unit 40A acquires the vehicle speed information and the acceleration information of the mobile robot 20 by specifying the vehicle speed information and the acceleration information included in the detection result acquired from the mobile robot 20. The acquisition unit 40A may acquire the vehicle speed information and the acceleration information of the mobile robot 20 by analyzing time-series captured images of the mobile robot 20 and the like.

The state information of the surrounding obstacles is information indicating the state of the obstacle C present around the mobile robot 20. The state information of the surrounding obstacle includes, for example, the position information and speed information of the obstacle C present around the mobile robot 20. The acquisition unit 40A acquires the position information and speed information of the obstacle C by analyzing the detection result of the sensor 26 such as a camera and a radar device. Incidentally, the acquisition unit 40A may acquire the relative position and the relative speed of the obstacle C with respect to the mobile robot 20 as the position information and the speed information of the obstacle C. Furthermore, the acquisition unit 40A may acquire the captured image of the periphery of the mobile robot 20 as the state information of the surrounding obstacle. Furthermore, the acquisition unit 40A may acquire the state information of the surrounding obstacle by specifying the obstacle information included in the map information.

When acquiring the current state of the mobile robot 20, the acquisition unit 40A calculates the reward of the acquired current state. The reward is a reward used in the reinforcement learning of a first inference model provided in the first action value function specifying unit 40B described later.

The acquisition unit 40A calculates the reward used in the reinforcement learning of the first inference model on the basis of the preference of the current state that is a result of the action of the mobile robot 20.

Specifically, the acquisition unit 40A calculates a reward having a larger value when the current state as the result of the action of the mobile robot 20 indicates a preferable state. On the other hand, the acquisition unit 40A calculates a reward having a smaller value when the current state as the result of the action of the mobile robot 20 indicates an unfavorable state.

The preferable state means a state in which the mobile robot 20 has acted according to a predetermined reference. It is sufficient that the reference is determined in advance. For example, the preferable state indicates avoidance of collision with the obstacle C, avoidance of entry into the entry prohibition area D, arrival at the destination point B, arrival at the destination point B in a short required time, a plurality of times of reciprocation from the departure point A to the destination point B, and the like.

The acquisition unit 40A calculates the reward by determining whether or not the action of the mobile robot 20 is in the preferable state on the basis of the acquired current state of the mobile robot 20.

For example, in the following cases, the acquisition unit 40A determines that the action of the mobile robot 20 is in the preferable state, and calculates a reward having a larger value. For example, a case is assumed in which the acquisition unit 40A determines that the mobile robot 20 has reached the destination point B on the basis of the acquired current state. In this case, the acquisition unit 40A calculates a reward having a large value. Furthermore, a case is assumed in which the acquisition unit 40A specifies the required time required to reach the destination point B from the departure point A on the basis of the acquired current state. In this case, the acquisition unit 40A calculates a reward having a larger value when the required time is shorter. Furthermore, a case is assumed in which the acquisition unit 40A calculates the number of times of reciprocation per unit time from the departure point A to the destination point B on the basis of the acquired current state. In this case, the acquisition unit 40A calculates a reward having a larger value when the number of times of reciprocation is larger.

For example, in the following cases, the acquisition unit 40A determines that the action of the mobile robot 20 is in the unfavorable state, and calculates a reward having a smaller value, for example, a negative value. For example, a case is assumed in which the acquisition unit 40A determines that the mobile robot 20 is in the unfavorable state on the basis of the acquired current state. For example, a case is assumed in which the acquisition unit 40A determines, for example, that the destination point B is unreachable, the mobile robot 20 enters the entry prohibition area D, or the mobile robot 20 collides with the obstacle C on the basis of the current state. In this case, the acquisition unit 40A calculates a reward having a smaller value.

Next, the first action value function specifying unit 40B will be described. The first action value function specifying unit 40B has a learning function of learning the first inference model by reinforcement learning. The first action value function specifying unit 40B specifies the first action value function of the mobile robot 20 on the basis of the current state and the first inference model.

The first inference model is a machine learning model that outputs the first action value function on the basis of the current state. That is, the first inference model is a machine learning model having the current state as an input and the first action value function as an output. Furthermore, the first inference model is a machine learning model of a reinforcement learning target by the first action value function specifying unit 40B. The first inference model includes, for example, a neural network.

The first action value function is an action value function output from the first inference model.

The action value function is a known action value function used in reinforcement learning, and is a function representing an action value in a case where an action a is selected in the trial at a timing t. The timing t represents the number of times of trial. The timing t may be a time. In this arrangement, a description will be given assuming that the timing t is the time t.

The action value is an expected value of a discount accumulation reward that can be acquired as a result of selecting the action a in the current state. For example, in the reinforcement learning algorithm DQN (Deep Q-Network), the action a is selected on the basis of the action value function.

The first action value function is expressed as, for example, $Q_1(s,a)$. s represents a current state, and a represents an action.

FIG. 3A is a schematic diagram illustrating an example of the first action value function at an initial learning stage. The initial learning stage indicates that the first inference model is at an initial stage of learning. In FIG. 3A, a horizontal axis represents the action, and a vertical axis represents the action value. A line diagram 51 represents the first action value function.

Returning to FIG. 2, the description is continued.

By using the current state of the mobile robot 20 and the reward acquired by the acquisition unit 40A, the first action value function specifying unit 40B learns the first inference model by reinforcement learning to output the first action value function.

As described above, the reward is calculated by the acquisition unit 40A on the basis of the acquired current state of the mobile robot 20. The mobile robot 20 acts according to the first action sequentially determined by the action determination unit 40D to be described later.

The first action is information indicating an action to be taken next by the mobile robot 20. The first action is determined by the action determination unit 40D to be described later. That is, the first action is information indicating an action to be taken next by the mobile robot 20, the action being determined by the information processing device 10A. The first action is, for example, information indicating the traveling direction of the mobile robot 20. The traveling direction indicates, for example, any one of right, left, straight, and stop. Incidentally, the first action may be information indicating the traveling direction and the target speed of the mobile robot 20. Furthermore, the first action is not limited to the traveling direction and the target speed as long as the first action is information indicating the action to be taken next by the mobile robot 20. For example, it is sufficient that the first action is determined according to the operation mechanism of a device such as the mobile robot 20.

The current state of the mobile robot 20 changes in accordance with the action according to the first action performed by the mobile robot 20. Therefore, the reward has a value corresponding to the first action output to the mobile robot 20.

In this regard, the first action value function specifying unit 40B learns the first inference model by reinforcement learning by using the current state of the mobile robot 20 acquired by the acquisition unit 40A, the reward, and the first action of the mobile robot 20 used to control the current state used for calculating the reward.

Specifically, the first action value function specifying unit 40B stores, in the storage unit 42, experience data including a current state $s_t$ of the mobile robot 20 acquired by the acquisition unit 40A at the time t, a reward $r_t$, an action $a_t$ used to control the current state of the mobile robot 20 used to calculate the reward $r_t$, and the current state $s_{t+1}$ acquired by the acquisition unit 40A at the next time t+1. Then, the first action value function specifying unit 40B learns the first inference model by reinforcement learning by using the experience data.

It is sufficient that a known reinforcement learning algorithm may be used as the algorithm of the reinforcement learning. For example, a deep Q-network (DQN), Sarsa, Actor-Critic, or the like is used as the reinforcement learning algorithm.

It is assumed that reinforcement learning is performed by the DQN. Furthermore, a scene in which experience data $x = (s_t, a_t, r_t, s_{t+1})$ is sampled is assumed. In this case, the first action value function specifying unit 40B determines the update amount of each of a plurality of parameters included in the first inference model by performing back propagation by using a loss function represented by the following Formula (1).

$$L = (r_t + \gamma \max\{Q_1(s_{t+1}, a_{t+1})\} - Q_1(s_t, a_t))^2$$

Formula (1)

In Formula (1), L represents a loss function. $r_t$ represents a reward at the time t. $\gamma$ is a value called a discount rate in reinforcement learning. $Q_1$ $(s_{t+1}, a_{t+1})$ represents the first action value function at the next time t+1. $Q_1(s_t, a_t)$ represents the first action value function at the time t. $s_t$ represents the current state s at the time t. $a_t$ represents an action at the time t.

The back propagation is an algorithm used when a neural network is learned in machine learning. The back propagation may also be referred to as an error inverse propagation method.

The first action value function specifying unit 40B specifies the first action value function to be used at the time t as an output from the first inference model by inputting the current state acquired by the acquisition unit 40A to the first inference model subjected to the reinforcement learning by the above processing.

The first action value function specifying unit 40B outputs the first action value function specified by using the first inference model to the action determination unit 40D.

Next, the second action value function specifying unit 40C will be described. The second action value function specifying unit 40C specifies the second action value function of the mobile robot 20 on the basis of the current state and the second inference model.

The second inference model is a model that outputs the second action value function on the basis of the current state. That is, the second inference model is a model having the current state as an input and the second action value function as an output. Furthermore, the second inference model is a model that is not a parameter update target. That is, the second inference model is a model that is not a reinforcement learning target. For example, the second inference model is a machine learning model, a statistical model, or the like.

In this arrangement, a mode that the second inference model is a machine learning model configured by a neural network or the like will be described as an example. Furthermore, in this arrangement, a mode that the second inference model is a pre-learned machine learning model which has been learned will be described as an example. It is sufficient that a known learning algorithm is used for preliminary learning of the second inference model. For example, an algorithm Conservative Q Learning of offline reinforcement learning or the like is used for the preliminary learning of the second inference model.

The learning data used for the preliminary learning of the second inference model may be data collected in any manner. For example, it is sufficient that experience data collected by a human operating a robot, experience data by a random strategy, or the like is be used as the learning data.

In this arrangement, a case where the second inference model is learned in advance from the data of the action of the mobile robot 20 based on a first rule will be described as an example.

The action of the mobile robot 20 based on the first rule is information indicating the action to be taken next by the mobile robot 20. In other words, the action of the mobile robot 20 based on the first rule is information indicating an action determined on the basis of the rule. The action of the mobile robot 20 based on the first rule may be, for example, information indicating the traveling direction of the mobile robot 20 similarly to the first action. Furthermore, similarly to the first action, the action may be information indicating the traveling direction and the target speed of the mobile robot 20, and the like.

The first rule is a rule that satisfies a minimum required performance regarding the action of the mobile robot 20. The minimum required performance is a minimum required performance for the mobile robot 20 determined in advance by an administrator or the like of the mobile robot 20.

For example, the first rule is a rule indicating traveling along a route determined by a search algorithm such as an A* (A-star) method from the departure point information, the destination point information, and the map information.

In addition, the first rule is a rule indicating traveling of stopping before the obstacle C or avoiding the obstacle C in a case where the obstacle C exists. Incidentally, in the case of the rule of stopping before the obstacle C, collision with the obstacle C is avoided. However, when the number of obstacles C detected before the mobile robot 20 reaches the destination point B increases, the action efficiency of the mobile robot 20 per unit time decreases. Therefore, it is preferable to set the first rule to satisfy both the safety guarantee and the minimum required performance.

The second action value function is an action value function output from the second inference model. Since the definition of the action value function has been described above, the description thereof will be omitted here. The second action value function is represented as $Q_2(s,a)$, for example, s represents a current state, and a represents an action.

FIG. 3B is a schematic diagram illustrating an example of the second action value function. In FIG. 3B, a horizontal axis represents the action, and a vertical axis represents the action value. A line diagram 52 represents the second action value function.

Returning to FIG. 2, the description is continued.

The second action value function specifying unit 40C specifies the second action value function to be used at the time t as an output from the second inference model by inputting the current state acquired by the acquisition unit 40A to the second inference model.

As described above, in this arrangement, the second action value function specifying unit 40C specifies the second action value function by using the second inference model learned in advance from the data of the action of the mobile robot 20 based on the first rule. Therefore, the action that maximizes the action value represented by the second action value function in the current state represents the action determined on the basis of the rule according to the first rule.

The second action value function specifying unit 40C outputs the second action value function specified by using the second inference model to the action determination unit 40D.

Next, the action determination unit 40D will be described.

The action determination unit 40D determines the first action of the mobile robot 20 on the basis of the first action value function and the second action value function. As described above, the first action is information indicating an action to be taken next by the mobile robot 20.

For example, the action determination unit 40D determines, as the first action, an action that maximizes one of the action value represented by the first action value function and the action value represented by the second action value function. In other words, the action determination unit 40D determines, as the first action, an action corresponding to the maximum action value among the action values represented by the first action value function or an action corresponding to the maximum action value among the action values represented by the second action value function.

Furthermore, the action determination unit 40D may select, as the third action value function, one of the first action value function and the second action value function, and determine the first action on the basis of the selected third action value function. The third action value function is represented as, for example, $Q_3(s,a)$. s represents a current state, and a represents an action.

For example, the action determination unit 40D changes the first selection probability of selecting the first action value function as the third action value function and the second selection probability of selecting the second action value function as the third action value function according to the learning time of the first inference model. When the learning time is lengthened, it means that the progress of learning of the first inference model progresses further. The longer learning time indicates that the progress of learning progresses further. The learning time is represented by, for example, the number of trials or a cumulative calculation time of the first inference model.

The first selection probability indicates a selection probability that the action determination unit 40D selects the first action value function as the third action value function. In other words, the first selection probability indicates a selection probability that an action corresponding to the maximum action value in the action value represented by the first action value function is selected as the first action.

The second selection probability indicates a selection probability that the action determination unit 40D selects the second action value function as the third action value function. In other words, the second selection probability indicates a selection probability that an action corresponding to the maximum action value in the action value represented by the second action value function is selected as the first action.

In this case, the action determination unit 40D decreases the first selection probability and increases the second selection probability as the learning time is shortened, and increases the first selection probability and decreases the second selection probability as the learning time is lengthened.

That is, the action determination unit 40D sets the first selection probability lower than the second selection probability at the start of learning. Then, the action determination unit 40D linearly increases the first selection probability according to the elapse of the learning time.

FIG. 4 is an explanatory diagram of an example of transition of the first selection probability and the second selection probability. The first selection probability is denoted by $\varepsilon$ and the second selection probability is denoted by $1-\varepsilon$. The learning time is denoted by t. In FIG. 4, a vertical axis represents the first selection probability, and a horizontal axis represents the learning time.

For example, the first selection probability at the learning start time, that is, the time of t = 0 is $\varepsilon = \varepsilon_0$. The maximum learning time is denoted by $t_{max}$, and the first selection probability at the time t is denoted by $\varepsilon = \varepsilon_0$ ($t/t_{max}$). In this case, the second selection probability is denoted by $1 - \varepsilon = \varepsilon_0 (1 - t/t_{max})$.

The action determination unit 40D sets the first selection probability to be low at the learning start time point. For example, $\varepsilon = \varepsilon_0 = 0.05$. Then, the action determination unit 40D increases the first selection probability and decreases the second selection probability as the learning time elapses. Therefore, the first selection probability $\varepsilon$ that the action determination unit 40D selects the first action value function as the third action value function is represented by, for example, a line diagram 50 illustrated in FIG. 4.

Therefore, at the initial learning stage in which the learning of the first inference model is insufficient, the probability that the second action value function is selected as the third action value function increases. Then, when the progress of the learning of the first inference model progresses, the probability that the first action value function is selected as the third action value function increases.

Then, the action determination unit 40D determines the first action on the basis of the third action value function. For example, an action corresponding to the maximum action value in the third action value function is determined as the first action. Specifically, the first action is expressed by the following Formula (A).

$$\arg\max\{Q_1(s,a)\} \qquad \text{Formula (A)}$$

Incidentally, a search method by the action determination unit 40D is not limited to this method. For example, the action determination unit 40D may perform Boltzmann search using the third action value function. With this search, the probability increases that the action determination unit 40D determines, as the first action, an action having the highest selection probability, that is, an action corresponding to the maximum action value in the third action value function. Furthermore, for example, the action determination unit 40D may determine the first action by an epsilon ready search using the third action value function.

In a case where the Boltzmann search using the third action value function is performed, a selection probability p(a|s) of selecting the action a in the current state s is expressed by the following Formula (2).

$$p(a|s) = \exp(Q_3(s,a)/T)/\Sigma\exp(Q_3(s,b)/T) \qquad \text{Formula (2)}$$

In Formula (2), $Q_3(s,a)$ represents the third action value function. T represents a Boltzmann temperature. $\Sigma$ represents calculating the sum of $Q_3(s,b)$ for a possible action b C A. A represents a set of possible actions, that is, an action space. s represents a current state. a represents an action. b of $Q_3(s,b)$ is an element of the action space A, that is, any one of possible actions.

Through these processes, the action determination unit 40D determines, as the first action, an action corresponding to the maximum action value in the first action value function selected as the third action value function or the second action value function selected as the third action value function.

Therefore, the action determination unit 40D changes the first selection probability and the second selection probability according to the learning time of the first inference model, so that the probability increases that the action corresponding to the maximum action value in the second action value function is determined as the first action increases at the initial stage of learning. Furthermore, when the learning time elapses and the progress of learning progresses, the probability increases that the action corresponding to the maximum action value in the first action value function is determined as the first action.

In this arrangement, the second inference model used to specify the second action value function is learned in advance from the data of the action of the mobile robot 20 based on the first rule that is a rule satisfying the minimum required performance regarding the action of the mobile robot 20.

Therefore, the action determination unit 40D can select, as the first action, an action with a high reward that can be acquired, as compared with a case where the first action is determined regardless of the progress of learning. In other words, the action determination unit 40D can determine the first action capable of learning the first inference model while satisfying the minimum required performance regarding the action of the mobile robot 20 over all stages from the initial stage of learning of the first inference model to the stage where the learning has sufficiently progressed.

Incidentally, FIG. 4 illustrates, as an example, a mode that the first selection probability is linearly changed with respect to the learning time. However, the change in the first selection probability is not limited to the linearly changing mode. Furthermore, the change in the first selection probability may be appropriately changed by an operation instruction of the input unit 44 by the user or the like.

Returning to FIG. 2, the description is continued.

The display control unit 40E displays various images on the display unit 46.

In this arrangement, the display control unit 40E displays, on the display unit 46, information indicating at least one of the progress of learning of the first inference model, the selection probability of the action determination unit 40D selecting at least one of the first action value function and the second action value function, the number of times of the action determination unit 40D selecting at least one of the first action value function and the second action value function, and whether the first action is an action that maximizes the action value represented by one of the first action value function and the second action value function.

The progress of learning of the first inference model displayed by the display control unit 40E is the progress at the current time. For example, the display control unit 40E displays the learning time of the first inference model, the time until the end of learning of the first inference model, and the like as the progress at the current time. Therefore, the display control unit 40E can provide the user with the progress status of learning of the first inference model at the current time in an easily confirmable manner.

The selection probability displayed by the display control unit 40E is at least one of the first selection probability that the action determination unit 40D selects the first action value function as the third action value function and the second selection probability that the second action value function is selected as the third action value function at the current time. As described above, the first selection probability and the second selection probability change according to the progress of learning. Therefore, by displaying the selection probability, the display control unit 40E can provide the user with at least one of the first selection probability and the second selection probability at the current time in an easily confirmable manner.

The number of times of selection displayed by the display control unit 40E is at least one of the number of times of selection in which the action determination unit 40D selects the first action value function as the third action value function and the number of times of selection in which the second action value function is selected as the third action value function in a period from the start of learning of the first inference model to the current time. As described above, the first selection probability and the second selection probability change according to the progress of learning. Therefore, the number of times of selection of each of the first action value function and the second action value function also changes according to the progress of learning. Therefore, by displaying the number of times of selection, the display control unit 40E can provide the user with the selection status of the action determination unit 40D selecting the first action value function and the second action value function at the current time in an easily confirmable manner.

The information indicating whether the first action is an action that maximizes the action value represented by one of the first action value function and the second action value function displayed by the display control unit 40E is information indicating the first action selected by the action determination unit 40D at the current time. Therefore, the display control unit 40E can provide the user with whether the action to be taken next by the mobile robot 20 at the current time is an action that maximizes the action value represented by the first action value function or an action that maximizes the action value represented by the second action value function in an easily confirmable manner.

The display control unit 40E may display these pieces of information on one display screen or on a plurality of different display screens. In addition, the display control unit 40E may display all of these pieces of information on the display screen at the same timing, or may display at least one piece of information on the display screen at a timing different from the other pieces of information.

FIGS. 5 to 7 are schematic diagrams illustrating an example of a display screen 70.

FIG. 5 is a schematic diagram illustrating an example of a display screen 60. The display screen 60 is an example of the display screen 70.

The display screen 60 includes an image 60A representing the progress of learning of the first inference model, an image 60B representing the first selection probability that is the probability of selecting the first action value function, an image 60C representing the number of times of selection of the first action value function, and an image 60D representing the number of times of selection of the second action value function. FIG. 5 illustrates, as an example, a time until the end of learning of the first inference model as the image 60A representing the progress of learning of the first inference model.

It is sufficient that the display control unit 40E may generate and display the display screen 60 by using the first action selected by the action determination unit 40D, the first selection probability $\varepsilon$ of the first action value function used in the selection of the first action, the first action value function used in the selection of the first action, the second action value function, and the progress.

FIG. 6 is a schematic diagram illustrating an example of a display screen 62. The display screen 62 is an example of the display screen 70.

The display screen 62 includes information indicating whether the first action is determined by the first action value function or the second action value function. For example, a case is assumed in which action candidates of the mobile robot 20 are "straight", "right", "left", and "stop", which are traveling directions. Then, a case is assumed in which the first action value function is selected as the third action value function by the action determination unit 40D, and the first action determined from the selected third action value function indicates the traveling direction "straight".

In this case, for example, the display control unit 40E displays information 62C indicating a learning-based action which is an action determined from the first action value function and information 62D indicating a rule-based action which is an action determined from the second action value function. Then, the display control unit 40E causes the selection icon of the information 62C to be displayed in color and the selection icon of the information 62D to be displayed in colorless. By displaying the selection icon of the information 62C in color, the display control unit 40E displays a state where the first action is determined from the first action value function.

For example, the display control unit 40E displays an image 62A representing an action candidate of the mobile robot 20 around an icon image 62B representing the mobile robot 20. Then, the display control unit 40E displays the image representing the selected "straight" in a color or brightness different from those of the other action candidates. For example, the display control unit 40E turns on the image representing "straight" and turns off the images representing the other action candidates. By turning on the image representing "straight", the display control unit 40E displays a state where the traveling direction "straight" is determined as the first action from the first action value function.

FIG. 7 is a schematic diagram illustrating an example of a display screen 64. The display screen 64 is an example of the display screen 70.

The display screen 64 includes information indicating whether the first action is determined by the first action value function or the second action value function. For example, a case is assumed in which action candidates of the mobile robot 20 are "straight", "right", "left", and "stop", which are traveling directions. Then, a case is assumed in which the second action value function is selected as the third action value function by the action determination unit 40D, and the first action determined from the selected third action value function indicates the traveling direction "left".

In this case, for example, the display control unit 40E displays information 64C indicating a learning-based action which is an action determined from the first action value function and information 64D indicating a rule-based action which is an action determined from the second action value function. Then, the display control unit 40E causes the selection icon of the information 64D to be displayed in color and the selection icon of the information 64C to be displayed in colorless. By displaying the selection icon of the information 64D in color, the display control unit 40E displays a state where the first action is determined from the second action value function.

For example, the display control unit 40E displays an image 64A representing an action candidate of the mobile robot 20 around an icon image 64B representing the mobile robot 20. Then, the display control unit 40E displays the image representing the selected "left" in a color or brightness different from those of the other action candidates. For example, the display control unit 40E turns on the image representing "left" and turns off the image representing the other action candidates. By turning on the image representing "left", the display control unit 40E displays a state where the traveling direction "left" is determined as the first action from the second action value function.

Since the display control unit 40E displays these display screens 70 on the display unit 46, it is possible to provide the user with various types of information such as the progress status of learning in an easy-to-understand manner. Therefore, the user can easily grasp whether the learning of the first inference model related to the action of the mobile robot 20 is in progress or completed by checking the display screen 70.

Returning to FIG. 2, the description is continued.

The transmission control unit 40F transmits the first action selected by the action determination unit 40D to the mobile robot 20 via the communication unit 48.

The control unit 22 of the mobile robot 20 receives the map information from the operation management system 30 via the communication unit 24. The control unit 22 controls the drive unit of the mobile robot 20 to start an action of moving from the departure point A indicated by the departure point information included in the map information toward the destination point B indicated by the destination point information included in the map information. With this process, the mobile robot 20 starts the action.

When starting the action, the control unit 22 of the mobile robot 20 transmits the detection result of the sensor 26 to the information processing device 10A. The control unit 22 sequentially transmits the detection result of the sensor 26 to the information processing device 10A at predetermined intervals. The control unit 22 receives the first action from the information processing device 10A as a response to the transmitted detection result. The control unit 22 controls the drive unit of the mobile robot 20 to execute the action corresponding to the received first action.

Therefore, the mobile robot 20 executes the first action determined by the information processing device 10A. That is, the mobile robot 20 can move from the departure point A toward the destination point B by acting along the first action sequentially transmitted from the information processing device 10A.

Next, an example of a flow of the information processing executed by the information processing device 10A according to this arrangement will be described.

FIG. 8 is a flowchart illustrating an example of the flow of the information processing executed by the information processing device 10A of this arrangement.

The acquisition unit 40A acquires the current state of the mobile robot 20 (Step S100). The acquisition unit 40A acquires the current state of the mobile robot 20 by using the detection result of the sensor 26 received from the mobile robot 20 and the map information received from the operation management system 30.

Next, the acquisition unit 40A calculates a reward in the current state acquired in Step S100 (Step S102).

The first action value function specifying unit 40B learns the first inference model by reinforcement learning to output the first action value function which has a higher reward and can be obtained in the current state by using the current state acquired in Step S100 and the reward calculated in Step S102 (Step S104).

The first action value function specifying unit 40B specifies the first action value function (Step S106). The first action value function specifying unit 40B specifies the first action value function as an output from the first inference model by inputting the current state acquired in Step S100 to the first inference model subjected to the reinforcement learning in Step S104.

The second action value function specifying unit 40C specifies the second action value function (Step S108). The second action value function specifying unit 40C specifies the second action value function as an output from the second inference model by inputting the current state acquired in Step S100 to the second inference model.

Next, the action determination unit 40D specifies the progress of learning of the first inference model of the first action value function specifying unit 40B (Step S110). For example, the action determination unit 40D specifies the learning time of the first inference model as the progress of learning.

The action determination unit 40D selects, as the third action value function, the first action value function specified in Step S106 or the second action value function specified in Step S108 according to the progress of learning specified in Step S110 (Step S112) .

The action determination unit 40D determines the first action from the third action value function selected in Step S112 (Step S114) .

The transmission control unit 40F transmits the first action determined in Step S114 to the mobile robot 20 (Step S116) .

The display control unit 40E displays the display screen 70 on the display unit 46 (Step S118) .

Incidentally, the timing at which the display screen 70 is displayed on the display unit 46 is not limited to this timing. For example, the display control unit 40E may start displaying the display screen 70 on the display unit 46 before starting the processing in Step S100, and update the display content of the display screen 70 according to the processing status by the control unit 40.

The control unit 40 determines whether or not to end the processing (Step S120). For example, the control unit 40 performs the determination of Step S120 by determining whether or not a signal indicating the end of processing is input by the operation instruction of the input unit 44 by the user or the like. When a negative determination is made in Step S120 (Step S120: No), the process returns to Step S100. When an affirmative determination is made in Step S120 (Step S120: Yes), this routine is ended.

Next, an example of a flow of information processing executed by the mobile robot 20 according to this arrangement will be described.

FIG. 9 is a flowchart illustrating an example of the flow of the information processing executed by the mobile robot 20 according to this arrangement.

The control unit 22 of the mobile robot 20 acquires the map information from the operation management system 30 via the communication unit 24 (Step S200). The control unit 22 controls the drive unit of the mobile robot 20 to start an action of moving from the departure point A indicated by the departure point information included in the map information toward the destination point B indicated by the destination point information included in the map information. With this process, the mobile robot 20 starts the action (Step S202).

The control unit 22 transmits the detection result of the sensor 26 to the information processing device 10A (Step S204).

The control unit 22 receives the first action from the information processing device 10A as a response to the detection result transmitted in Step S204 (Step S206). The control unit 22 controls the drive unit of the mobile robot 20 to execute the action corresponding to the received first action. Therefore, the mobile robot 20 executes the first action determined by the information processing device 10A (Step S208).

The control unit 22 determines whether or not to end the processing (Step S210). For example, the control unit 22 determines whether or not to end the processing by determining whether or not a processing end signal is input by an operation instruction by the user or the like (Step S210). When a negative determination is made in Step S210 (Step S210: No), the process returns to Step S204. On the other hand, when an affirmative determination is made in Step S210 (Step S210: Yes), this routine is ended.

As described above, the information processing device 10A according to this arrangement includes the acquisition unit 40A, the first action value function specifying unit 40B, the second action value function specifying unit 40C, and the action determination unit 40D. The acquisition unit 40A acquires the current state of the mobile robot 20 which is an example of a device. The first action value function specifying unit 40B has a learning function of learning the first inference model by reinforcement learning, and specifies the first action value function of the mobile robot 20 on the basis of the current state and the first inference model. The second action value function specifying unit 40C specifies the second action value function of the mobile robot 20 on the basis of the current state and the second inference model that is not a parameter update target. The action determination unit 40D determines the first action of the mobile robot 20 on the basis of the first action value function and the second action value function.

In the related art, reinforcement learning is performed by random action search. Therefore, in the related art, it is difficult to learn the action of the device while being applied to the device such as the mobile robot 20.

On the other hand, in the information processing device 10A of this arrangement, the first action of the mobile robot 20 is determined on the basis of the first action value function specified from the first inference model that is a reinforcement learning target and the second action value function specified from the second inference model that is not a parameter update target.

A learning situation by the information processing device 10A changes. The learning situation is, for example, the learning progress of the first inference model, the first action value function changing according to the learning progress, the fluctuation situation of the first action value function with respect to the second action value function, and the like. Therefore, by the action determination unit 40D determining the first action from the first action value function and the second action value function according to the learning situation, it is possible to determine the first action capable of learning the first inference model while satisfying the minimum required performance regarding the action of the mobile robot 20 over all stages from the initial stage of learning of the first inference model to the stage where the learning has sufficiently progressed.

Therefore, the information processing device 10A of this arrangement can learn the first inference model by reinforcement learning while being operated in the mobile robot 20 which is an actual machine.

Therefore, the information processing device 10A of this arrangement can perform the reinforcement learning while being applied to a device.

Furthermore, in the information processing device 10A of this arrangement, the action determination unit 40D selects, as the third action value function, one of the first action value function and the second action value function, and determines the first action on the basis of the selected third action value function. As described above, the action determination unit 40D changes the first selection probability of selecting the first action value function as the third action value function and the second selection probability of selecting the second action value function as the third action value function according to the learning time of the first inference model, and decreases the first selection probability and increases the second selection probability as the learning time is shortened, and increases the first selection probability and decreases the second selection probability as the learning time is lengthened.

As described above, a first action probability function is an action value function specified using the first inference model. Furthermore, the second action value function is, for example, an action value function specified by using the second inference model learned in advance from the data of the action of the mobile robot 20 based on the first rule. Then, the action determination unit 40D selects, as the third action value function, any one of the first action value function and the second action value function according to the learning time of the first inference model, and determines the first action by using the third action value function.

Therefore, the action determination unit 40D can determine the first action by using the second action value function determined on the basis of the rule using the first rule at the initial learning stage where learning of the first inference model is insufficient, and can increase the probability of determining the first action by using the first action value function determined on the basis of learning when the progress of learning of the first inference model progresses.

Therefore, in the initial stage of learning, the probability increases that the action that maximizes the action value represented by the second action value function is determined as the first action. The second inference model used to specify the second action value function is learned in advance from the data of the action of the mobile robot 20 based on the first rule that satisfies the minimum required performance regarding the action of the mobile robot 20. Therefore, the information processing device 10A of this arrangement can satisfy the minimum required performance regarding the action of the mobile robot 20 at the initial stage of learning.

As the learning time is lengthened and the progress of learning progresses, the probability increases that the action that maximizes the action value represented by the first action value function is determined as the first action. As the progress of learning progresses, the reward based on the first action obtained by the first inference model used to specify the first action function increases. Therefore, in the information processing device 10A of this arrangement, the minimum required performance regarding the action of the mobile robot 20 can be satisfied even in a stage where learning has progressed.

Therefore, the action determination unit 40D can determine, as the first action, an action with a high reward that can be acquired, as compared with a case where the first action is determined regardless of the progress of learning. In other words, the action determination unit 40D can select the first action capable of learning the first inference model by reinforcement learning while satisfying the minimum required performance related to the action of the mobile robot 20 over all stages from the initial stage of learning of the first inference model to the stage where the learning has sufficiently progressed.

FIG. 10 is an explanatory diagram of an example of reward lines.

In FIG. 10, a vertical axis represents the reward, and a horizontal axis represents the learning time. In FIG. 10, P1 represents a reward that satisfies the minimum required performance of the mobile robot 20. P2 represents a reward that satisfies the optimum required performance of the mobile robot 20. A line diagram 59 is a line diagram indicating a reward line according to the reinforcement learning method of this arrangement. A line diagram 590 is a line diagram indicating a reward line according to a conventional reinforcement learning method.

As illustrated in FIG. 10, in the conventional reinforcement learning method, random action selection is performed particularly at the beginning of learning. Therefore, the mobile robot 20 cannot reach the destination point B and cannot acquire the reward. In addition, in the conventional reinforcement learning method, it takes time to reach the reward P2 that satisfies the optimum required performance. Furthermore, in the related art, when the mobile robot 20 executes an action determined based on learning at the initial stage of learning in which the learning of the first inference model is insufficient, the mobile robot 20 may enter an unintended state, and an accident or a failure may occur during the reinforcement learning.

Therefore, in the related art, it is difficult to perform the reinforcement learning while being applied to a device such as the mobile robot 20 which is an actual machine from the viewpoint of realizing the required performance and ensuring safety.

On the other hand, in the information processing device 10A of this arrangement, any one of the first action value function and the second action value function can be selected as the third action value function according to the learning time of the first inference model. That is, the information processing device 10A of this arrangement can, as the third action value function, select the second action value function by the second inference model at the initial learning stage in which the reinforcement learning of the first inference model is insufficient. Furthermore, the information processing device 10A can select, as the third action value function, the first action value function by the first inference model when the progress of learning of the first inference model progresses. Therefore, the information processing device 10A of this arrangement can cause the mobile robot 20 to act while collecting the learning data while satisfying the minimum required performance over all stages from the initial stage of learning to the stage where the progress of learning has progressed.

Therefore, the information processing device 10A of this arrangement can learn the first inference model while being operated in the mobile robot 20 which is an actual machine.

Second arrangement

In this arrangement, a mode that an action value function obtained by synthesizing the first action value function and the second action value function is used as the third action value function will be described.

Incidentally, in this arrangement, the same reference numerals are given to portions having the same functions and configurations as those of the above-described arrangement, and a detailed description thereof will be omitted.

FIG. 11 is a functional block diagram of an example of an information processing system 1B of this arrangement. The information processing system 1B is an example of the information processing system 1.

The information processing system 1B includes an information processing device 10B, the mobile robot 20, and the operation management system 30. The information processing device 10B, the mobile robot 20, and the operation management system 30 are communicably connected via the network N or the like. The mobile robot 20 and the operation management system 30 are similar to those in the above-described arrangement.

The information processing device 10B is an example of the information processing device 10. The information processing device 10B includes a control unit 41, the storage unit 42, the input unit 44, the display unit 46, and the communication unit 48. The control unit 41, the storage unit 42, the input unit 44, the display unit 46, and the communication unit 48 are communicably connected via the bus 49 or the like. The information processing device 10B is similar to the information processing device 10A of the above-described arrangement except that the control unit 41 is provided instead of the control unit 40.

The control unit 41 executes various types of information processing in the information processing device 10B.

The control unit 41 includes the acquisition unit 40A, the first action value function specifying unit 40B, the second action value function specifying unit 40C, an action determination unit 41D, the display control unit 41E, and the transmission control unit 40F. The acquisition unit 40A, the first action value function specifying unit 40B, the second action value function specifying unit 40C, and the transmission control unit 40F are similar to those in the above-described arrangement. That is, the control unit 41 is similar to the control unit 40 of the above-described arrangement except that the control unit 41 includes the action determination unit 41D and the display control unit 41E instead of the action determination unit 40D and the display control unit 40E.

Similarly to the action determination unit 40D of the above-described arrangement, the action determination unit 41D determines the first action of the mobile robot 20 on the basis of the first action value function and the second action value function.

Here, in the above-described arrangement, a mode that the action determination unit 40D changes the first selection probability of selecting the first action value function as the third action value function and the second selection probability of selecting the second action value function as the third action value function according to the learning time of the first inference model has been described as an example. In a case where the action determination unit 40D is configured to change the first selection probability and the second selection probability according to the learning time, it is necessary for the user to manually adjust in advance the change in ε that is the first selection probability. For example, as described with reference to FIG. 4, in a case where the first selection probability is set to be linearly increased in accordance with the lapse of the learning time, it is necessary for the user to manually adjust in advance the slope of increase that is the change rate of the first selection probability with respect to the learning time.

In this regard, the action determination unit 41D of this arrangement includes a third action value function specifying unit 41G and an action selection unit 41H.

The third action value function specifying unit 41G specifies a third action value function obtained by synthesizing the first action value function and the second action value function. In this arrangement, the third action value function specifying unit 41G specifies the maximum function of the first action value function and the second action value function as the third action value function obtained by synthesizing the first action value function and the second action value function.

The maximum function of the first action value function and the second action value function represents a set of maximum action values for each action among the action value for the action represented by the first action value function and the action value for the action represented by the second action value function.

Specifically, the third action value function specifying unit 41G specifies the third action value function by using the following Formula (4).

$$Q_3(s,a) = Max(Q_1(s,a),Q_2(s,a)) \qquad \text{Formula (4)}$$

In Formula (4), $Q_3(s,a)$ represents the third action value function. $Q_1(s,a)$ represents the first action value function. $Q_2(s,a)$ represents the first action value function. $Max(Q_1(s,a),Q_2(s,a))$ represents a maximum function of the first action value function and the second action value function. s represents a current state. a represents an action.

The action selection unit 41H selects the first action on the basis of the third action value function specified by the third action value function specifying unit 41G. It is sufficient that the action selection unit 41H selects the first action from the third action value function by Boltzmann search or the like, similarly to the action determination unit 40D of the above-described arrangement.

An example of processing by the action determination unit 41D will be described with a specific example.

FIG. 12A is a schematic diagram illustrating an example of the first action value function at the initial learning stage. FIG. 12B is a schematic diagram illustrating an example of the second action value function at the initial learning stage. FIG. 12C is a schematic diagram illustrating an example of a relationship between the third action value function at the initial learning stage and the first action value function and the second action value function. In FIGS. 12A to 12C, the line diagram 51 represents the first action value function, the line diagram 52 represents the second action value function, and a line diagram 53 represents the third action value function.

For example, a scene is assumed in which the first action value function at the initial learning stage is a function represented by the line diagram 51 of FIG. 12A and the second action value function is a function represented by the line diagram 52 of FIG. 12B.

As described in the above-described arrangement, the first action probability function is an action value function specified using the first inference model. Furthermore, the second action value function is, for example, an action value function specified by using the second inference model learned in advance from the data of the action of the mobile robot 20 based on the first rule. That is, an action a2 that maximizes the action value represented by the second action value function represented by the line diagram 52 illustrated in FIG. 12B coincides with the action obtained by the control of the mobile robot 20 based on the rule using the first rule.

As illustrated in FIGS. 12A and 12B, the maximum value of the action value of the first action value function represented by the line diagram 51 at the initial learning stage is a value smaller than the maximum value of the action value of the second action value function represented by the line diagram 52. Therefore, when the third action value function specifying unit 41G specifies, as the third action value function, the maximum function of the first action value function and the second action value function, the third action value function represented by the line diagram 53 illustrated in FIG. 12C is specified.

When the action selection unit 41H selects the first action on the basis of the third action value function represented by the line diagram 53 illustrated in FIG. 12C, as a result, the selection probability increases that the action a2 maximizing the action value represented by the second action value function represented by the line diagram 52 is selected as the first action.

Next, an example of the action value function at the learning progress stage in which the progress of learning has progressed will be described.

FIG. 13A is a schematic diagram illustrating an example of the first action value function at the learning progress stage. FIG. 13B is a schematic diagram illustrating an example of the second action value function at the learning progress stage. FIG. 13C is a schematic diagram illustrating an example of a relationship between the third action value function at the learning progress stage and the first action value function and the second action value function. In FIGS. 13A to 13C, the line diagram 51 represents the first action value function, the line diagram 52 represents the second action value function, and the line diagram 53 represents the third action value function.

For example, a scene is assumed in which the first action value function at the learning progress stage is a function represented by the line diagram 51 in FIG. 13A. Since the second action value function is an action value function output from the second inference model that does not update the parameter, the second action value function is an action value function represented by the line diagram 52 similar to the line diagram 52 illustrated in FIG. 12B.

As illustrated in FIGS. 13A and 13B, the maximum value of the action value of the first action value function represented by the line diagram 51 at the learning progress stage is a value larger than the maximum value of the action value of the second action value function represented by the line diagram 52. Therefore, when the third action value function specifying unit 41G specifies, as the third action value function, the maximum function of the first action value function and the second action value function, the third action value function represented by the line diagram 53 illustrated in FIG. 13C is specified.

When the action selection unit 41H selects the first action on the basis of the third action value function represented by the line diagram 53 illustrated in FIG. 13C, as a result, the first selection probability, which is the selection probability that the action a1 maximizing the action value represented by the first action value function represented by the line diagram 51 at the learning progress stage is selected as the first action, increases.

That is, in this arrangement, the second selection probability that the action by the second inference model is selected as the first action increases at the initial learning stage, and the first selection probability that the action by the first inference model is selected as the first action increases at the learning progress stage. Then, the third action value function changes according to the progress of learning of the first inference model.

As described above, in this arrangement, the third action value function specifying unit 41G of the action determination unit 41D specifies the third action value function obtained by synthesizing the first action value function and the second action value function, and the action selection unit 41H selects the first action on the basis of the specified third action value function. Therefore, in this arrangement, the action determination unit 41D can automatically adjust the first selection probability without the user manually adjusting the slope of the increase in the first selection probability with respect to the learning time. That is, the action determination unit 41D can automatically adjust the selection probability such that the first selection probability is lowered and the second selection probability is increased as the learning time is shortened, and the first selection probability is increased and the second selection probability is lowered as the learning time is lengthened.

Returning to FIG. 11, the description is continued.

The display control unit 41E displays various images on the display unit 46, similarly to the display control unit 40E of the above-described arrangement.

Similarly to the display control unit 40E of the above-described arrangement, the display control unit 41E displays, on the display unit 46, information indicating at least one of the progress of learning of the first inference model, the selection probability of the action determination unit 40D selecting at least one of the first action value function and the second action value function, the number of times of the action determination unit 40D selecting at least one of the first action value function and the second action value function, and whether the first action is an action that maximizes the action value represented by one of the first action value function and the second action value function.

In this arrangement, the display control unit 41E further displays, on the display unit 46, information indicating at least one of the selection probability that the action that maximizes the action value represented by the second action value function has been selected as the first action and the transition of the selection probability.

The display control unit 41E may display these pieces of information on one display screen or on a plurality of different display screens. Furthermore, the display control unit 41E may display all of these pieces of information on the display screen at the same timing, or may display at least one piece of information on the display screen at a timing different from the other pieces of information.

FIG. 14 is a schematic diagram illustrating an example of a display screen 66. The display screen 66 is an example of the display screen 70.

The display screen 66 includes an image 66E representing the selection probability that the action maximizing the action value represented by the second action value function has been selected as the first action. That is, the image 66E representing the current second selection probability is displayed on the display screen 66.

Therefore, the display control unit 41E can provide the second selection probability that the rule-based action has been selected as the first action to the user in an easily confirmable manner.

Furthermore, for example, the display screen 66 includes information indicating whether the first action is determined by the first action value function or the second action value function. For example, a case is assumed in which action candidates of the mobile robot 20 are "straight", "right", "left", and "stop", which are traveling directions. Then, a case is assumed in which the first action value function is specified as the third action value function by the third action value function specifying unit 41G, and the first action selected by the action selection unit 41H from the specified third action value function indicates the traveling direction "straight".

In this case, for example, the display control unit 41E displays information 66C indicating a learning-based action which is an action determined from the first action value function and information 66D indicating a rule-based action which is an action determined from the second action value function. Then, the display control unit 41E causes the selection icon of the information 66C to be displayed in color and the selection icon of the information 66D to be displayed in colorless. By displaying the selection icon of the information 66C in color, the display control unit 41E displays a state where the first action is determined from the first action value function.

For example, similarly to the display control unit 40E of the above-described arrangement, the display control unit 41E displays an image 66A representing an action candidate of the mobile robot 20 around an icon image 66B representing the mobile robot 20. Then, the display control unit 41E displays the image representing the selected "straight" in a color or brightness different from those of the other action candidates. For example, the display control unit 41E turns on the image representing "straight" and turns off the images representing the other action candidates. By turning on the image representing "straight", the display control unit 41E displays a state where the traveling direction "straight" is determined as the first action from the first action value function.

FIG. 15 is a schematic diagram illustrating an example of a display screen 68. The display screen 68 is an example of the display screen 70.

The display screen 68 includes information 68A indicating the transition of the selection probability that the action that maximizes the action value represented by the second action value function is selected as the first action, that is, the transition of the second selection probability. For example, the display control unit 41E displays, on the display unit 46, the display screen 68 including the information 68A indicating the transition of the second selection probability from the learning start time to the current time.

Therefore, the display control unit 41E can provide the transition of the second selection probability that the rule-based action has been selected as the first action to the user in an easily confirmable manner.

Next, an example of a flow of the information processing executed by the information processing device 10B of this arrangement will be described.

FIG. 16 is a flowchart illustrating an example of the flow of the information processing executed by the information processing device 10B of this arrangement.

The information processing device 10B executes processing of Steps S300 to S308 in a similar manner to Steps S100 to S108 (see FIG. 8) of the above-described arrangement.

Specifically, the acquisition unit 40A acquires the current state of the mobile robot 20 (Step S300). Next, the acquisition unit 40A calculates a reward in the current state acquired in Step S300 (Step S302). The first action value function specifying unit 40B learns the first inference model by reinforcement learning to output the first action value function which has a higher reward and can be obtained in the current state by using the current state acquired in Step S300 and the reward calculated in Step S302 (Step S304). The first action value function specifying unit 40B specifies the first action value function by inputting the current state acquired in Step S300 to the first inference model subjected to the reinforcement learning in Step S304 (Step S306). The second action value function specifying unit 40C specifies the second action value function by inputting the current state acquired in Step S300 to the second inference model (Step S308).

Next, the third action value function specifying unit 41G of the action determination unit 41D specifies, as the third action value function, the maximum function of the first action value function specified in Step S306 and the second action value function specified in Step S308 (Step S310) .

The action selection unit 41H selects the first action on the basis of the third action value function specified in Step S310 (Step S312).

The transmission control unit 40F transmits the first action selected in Step S312 to the mobile robot 20 (Step S314). The display control unit 41E displays the display screen 70 on the display unit 46 (Step S316).

Incidentally, the timing at which the display screen 70 is displayed on the display unit 46 is not limited to this timing. For example, the display control unit 41E may start displaying the display screen 70 on the display unit 46 before starting the processing in Step S300, and update the display content of the display screen 70 according to the processing status by the control unit 41.

The control unit 41 determines whether or not to end the processing (Step S318). It is sufficient that the control unit 41 determines whether or not to end the processing in a similar manner to Step S120 (see FIG. 8) of the above-described arrangement. When a negative determination is made in Step S318 (Step S318: No), the process returns to Step S300. When an affirmative determination is made in Step S318 (Step S318: Yes), this routine is ended.

As described above, in the information processing device 10B of this arrangement, the third action value function specifying unit 41G of the action determination unit 41D specifies the third action value function obtained by synthesizing the first action value function and the second action value function. The action selection unit 41H selects the first action on the basis of the third action value function.

In the third action value function generated by the synthesis, the third action value function changes according to the progress of learning of the first inference model. Therefore, in this arrangement, the action determination unit 41D can automatically adjust the first selection probability without the user manually adjusting the slope of the increase in the first selection probability with respect to the learning time. That is, the action determination unit 41D can automatically adjust the selection probability such that the first selection probability is lowered and the second selection probability is increased as the learning time is shortened, and the first selection probability is increased and the second selection probability is lowered as the learning time is lengthened.

Therefore, in addition to the effects of the above-described arrangements, the information processing device 10B of this arrangement can further easily improve the performance at the initial learning stage of reinforcement learning.

Third arrangement

In this arrangement, a mode that the third action value function is specified by using a fourth action value function obtained by correcting the first action value function on the basis of the second action value function will be described.

Incidentally, in this arrangement, the same reference numerals are given to portions having the same functions and configurations as those of the above-described arrangement, and a detailed description thereof will be omitted.

FIG. 17 is a functional block diagram of an example of an information processing system 1C of this arrangement. The information processing system 1C is an example of the information processing system 1.

The information processing system 1C includes an information processing device 10C, the mobile robot 20, and the operation management system 30. The information processing device 10C, the mobile robot 20, and the operation management system 30 are communicably connected via the network N or the like. The mobile robot 20 and the operation management system 30 are similar to those in the above-described arrangement.

The information processing device 10C is an example of the information processing device 10. The information processing device 10C includes a control unit 43, the storage unit 42, the input unit 44, the display unit 46, and the communication unit 48. The control unit 43, the storage unit 42, the input unit 44, the display unit 46, and the communication unit 48 are communicably connected via the bus 49 or the like. The information processing device 10C is similar to the information processing device 10B of the above-described arrangement except that the control unit 43 is provided instead of the control unit 41.

The control unit 43 executes various types of information processing in the information processing device 10C.

The control unit 43 includes the acquisition unit 40A, the first action value function specifying unit 40B, the second action value function specifying unit 40C, an action determination unit 43D, the display control unit 43E, and the transmission control unit 40F. The acquisition unit 40A, the first action value function specifying unit 40B, the second action value function specifying unit 40C, and the transmission control unit 40F are similar to those in the above-described arrangement. That is, the control unit 43 is similar to the control unit 41 of the above-described arrangement except that the control unit 43 includes the action determination unit 43D and the display control unit 43E instead of the action determination unit 41D and the display control unit 41E.

Similarly to the action determination unit 40D of the above-described arrangement, the action determination unit 43D determines the first action of the mobile robot 20 on the basis of the first action value function and the second action value function.

In this arrangement, the action determination unit 43D includes an action value function correction unit 43I, a third action value function specifying unit 43G, and the action selection unit 41H. The action selection unit 41H is similar to the action selection unit 41H of the second arrangement. That is, the action determination unit 43D is similar to the action determination unit 41D of the above-described arrangement except that the action determination unit 43D includes the third action value function specifying unit 43G instead of the third action value function specifying unit 41G and further includes the action value function correction unit 43I.

Here, in the second arrangement, a mode that the third action value function specifying unit 41G specifies the third action value function obtained by synthesizing the first action value function and the second action value function has been described as an example. Then, a mode that the action selection unit 41H automatically adjusts the first selection probability and the second selection probability by determining the first action on the basis of the third action value function has been described. As described above, the first selection probability is a selection probability that the action that maximizes the action value represented by the first action value function is selected as the first action. As described above, the second selection probability is a selection probability that the action that maximizes the action value represented by the second action value function is selected as the second action.

In a case where the third action value function specifying unit 41G is configured to specify the third action value function obtained by synthesizing the first action value function and the second action value function, it may be necessary for the user to manually adjust the reward setting calculated by the acquisition unit 40A from the current state.

The present problem will be specifically described. The value of the action value represented by the action value function depends on the reward setting.

For example, a case is assumed in which the maximum value of the action value represented by the second action value function is smaller than the minimum value of the action value represented by the first action value function at the initial learning stage. In the case of this assumption, the third action value function coincides with the first action value function at the initial learning stage. Therefore, in this case, when the action selection unit 41H selects the first action on the basis of the third action value function, the probability that the action that maximizes the action value represented by the second action value function is selected as the first action is extremely low at the initial learning stage. That is, in this case, at the initial learning stage, the information processing device 10 has difficulty in determining the first action capable of learning the first inference model while satisfying the minimum required performance regarding the action of the mobile robot 20.

For example, a case is assumed in which the maximum value of the action value represented by the first action value function is smaller than the minimum value of the action value represented by the second action value function at the initial learning stage. In the case of this assumption, the third action value function coincides with the second action value function at the initial learning stage. Therefore, in this case, when the action selection unit 41H selects the first action on the basis of the third action value function, the probability that the action that maximizes the action value represented by the first action value function is selected as the first action is extremely low at the initial learning stage. Therefore, in this case, it is difficult for the information processing device 10 to advance the reinforcement learning of the first inference model.

From the viewpoint of avoiding these situations, in the information processing device 10, there is a case where the user needs to manually adjust the reward setting such that the action value represented by the first action value function becomes a value between the maximum value and the minimum value of the action values represented by the second action value function at the initial learning stage.

However, in order for the user to manually adjust the reward setting, it is necessary to perform trial and error of the operation by the mobile robot 20.

In this regard, in the information processing device 10C of this arrangement, the action determination unit 43D includes the action value function correction unit 43I, the third action value function specifying unit 43G, and the action selection unit 41H.

The action value function correction unit 43I specifies the fourth action value function obtained by correcting the first action value function on the basis of the second action value function. For example, the third action value function specifying unit 43G specifies the fourth action value function by the following Formula (5).

$$Q_4(s,a) = Q_1(s,a) + D(s) \qquad \text{Formula (5)}$$

In Formula (5), $Q_4(s,a)$ represents the fourth action value function. $Q_1(s,a)$ represents the first action value function. s represents a current state. a represents an action. D(s) is a correction value of the first action value function, and is a value obtained on the basis of the second action value function.

For example, the action value function correction unit 43I specifies the fourth action value function by correcting the first action value function such that the action value for the action represented by the first action value function becomes a value between the maximum value and the minimum value of the action values for the actions represented by the second action value function.

Specifically, the action value function correction unit 43I calculates D(s), which is the correction value in the above Formula (5), by the following Formula (6).

$$D(s) = (\max Q_2(s,a) + \min Q_2(s,a))/2 \quad \text{Formula (6)}$$

In Formula (6), $\max Q_2(s,a)$ represents the maximum function of the second action value function. $\min Q_2(s,a)$ represents the minimum function of the second action value function. s represents a current state. a represents an action.

Then, the action value function correction unit 43I substitutes D(s), which is the correction value represented by Formula (6), into the above Formula (5) to correct the first action value function such that the action value for the action represented by the first action value function becomes a value between the maximum value and the minimum value of the action values for the actions represented by the second action value function.

For example, the action value function correction unit 43I may specify the fourth action value function obtained by correcting the first action value function such that the second selection probability at the start of learning of the first inference model becomes a predetermined selection probability. As described above, the second selection probability represents a selection probability that the action selection unit 41H selects the second action value function as the third action value function, and represents a selection probability that an action corresponding to the maximum action value represented by the second action value function is selected as the first action.

Specifically, the action value function correction unit 43I calculates D(s), which is the correction value in the above Formula (5), by the following Formula (7).

$$D(s)=\log(1-\varepsilon)/((N-1)\times\varepsilon)+\max Q_2(s,a) \quad \text{Formula (7)}$$

In Formula (7), $\varepsilon$ represents the predetermined selection probability described above. $\max Q_2(s,a)$ represents the maximum function of the second action value function. N represents the number of candidates of an action to be taken next by the mobile robot 20. For example, N is four of "right", "left", "straight", and "stop" which are actions to be taken next by the mobile robot 20. s represents a current state. a represents an action.

Then, the action value function correction unit 43I specifies the fourth action value function obtained by substituting D(s), which is the correction value represented by Formula (7), into the above Formula (5) to correct the first action value function such that the second selection probability at the start of learning of the first inference model becomes the predetermined selection probability $\varepsilon$.

Incidentally, the action value function correction unit 43I may specify the fourth action value function obtained by correcting the first action value function so as to become the selection probability $\varepsilon$ input by the user. In this case, for example, the display control unit 43E displays, on the display unit 46, the display screen 70 for receiving the input of the selection probability defined as the second selection probability.

FIG. 18 is a schematic diagram of an example of a display screen 69. The display screen 69 is an example of the display screen 70. The display screen 69 includes an input field 69A for the value of the selection probability defined as the second selection probability. The user operates the input unit 44 while viewing the display screen 69 to input a value of a desired selection probability in the input field 69A. It is sufficient that the action value function correction unit 43I uses the selection probability that the input by the user is received via the display screen 69 as the selection probability $\varepsilon$ to be used for correction of the first action value function and corrects the first action value function such that the second selection probability at the start of learning of the first inference model becomes the selection probability $\varepsilon$.

Returning to FIG. 17, the description is continued.

For example, as described above, a case assumed in which the action value function correction unit 43I specifies the fourth action value function by correcting the first action value function such that the action value for the action represented by the first action value function becomes a value between the maximum value and the minimum value of the action values for the actions represented by the second action value function.

In the case of this assumption, the action value function correction unit 43I specifies the fourth action value function obtained by correcting the first action value function such that the action value for the action represented by the first action value function becomes a value that is input by the user and that is between the maximum value and the minimum value of the action values for the actions represented by the second action value function.

In this case, for example, the display control unit 43E displays, on the display unit 46, an input screen of an adjustment value indicating what value between the maximum value and the minimum value of the action values of the second action value function the action value represented by the first action value function is to be corrected to. The user operates the input unit 44 while viewing the input screen to input the adjustment value to the input screen. It is sufficient that the action value function correction unit 43I uses the adjustment value, for which the user's input is received, to specify the fourth action value function obtained by correcting the action value represented by the first action value function to be between the maximum value and the minimum value of the action values of the second action value function.

Next, the third action value function specifying unit 43G will be described.

The third action value function specifying unit 43G specifies, as the third action value function, the maximum function of the fourth action value function specified by the action value function correction unit 43I and the second action value function specified by the second action value function specifying unit 40C. It is sufficient that the third action value function specifying unit 43G may specify the third action value function similarly to the third action value function specifying unit 41G except that the fourth action value function is used instead of the first action value function.

Then, similarly to the above-described arrangement, the action selection unit 41H selects the first action on the basis of the third action value function specified by the third action value function specifying unit 41G.

An example of processing by the action determination unit 43D of this arrangement will be described with a specific example.

FIGS. 19A to 19D are explanatory diagrams of an example of processing by the action determination unit 43D. In FIGS. 19A to 19D, a horizontal axis represents the action, and a vertical axis represents the action value.

FIG. 19A is a schematic diagram illustrating an example of the first action value function at the initial learning stage. FIG. 19B is a schematic diagram illustrating an example of the second action value function at the initial learning stage. For example, a scene is assumed in which the first action value function is a function represented by the line diagram 51 of FIG. 19A and the second action value function is a function represented by the line diagram 52 of FIG. 19B.

As illustrated in FIGS. 19A and 19B, a case is assumed in which the maximum value of the action value of the second action value function represented by the line diagram 52 is smaller than the minimum value of the action value of the first action value function represented by the line diagram 51 at the initial learning stage. In the case of this assumption, the third action value function coincides with the first action value function at the initial learning stage. Therefore, in this case, when the action selection unit 41H selects the first action on the basis of the third action value function, the probability that the action that maximizes the action value represented by the second action value function is selected as the first action is extremely low at the initial learning stage. That is, in this case, at the initial learning stage, the information processing device 10 has difficulty in determining the first action capable of learning the first inference model while satisfying the minimum required performance regarding the action of the mobile robot 20.

In this regard, the action value function correction unit 43I specifies the fourth action value function obtained by correcting the first action value function on the basis of the second action value function. For example, the action value function correction unit 43I performs correction such that the action value for each action of the first action value function represented by the line diagram 51 becomes a value between the maximum value and the minimum value of the action values for respective actions of the second action value function represented by the line diagram 52.

FIG. 19C is an explanatory diagram of an example of a relationship between the first action value function before correction and the fourth action value function that is the first action value function after correction.

A scene is assumed in which the action value function correction unit 43I corrects the first action value function illustrated in FIG. 19A by using the second action value function illustrated in FIG. 19B. In this case, as illustrated in FIG. 19C, the first action value function represented by the line diagram 52 is corrected to the fourth action value function represented by a line diagram 54 (see arrow B). That is, the fourth action value function represented by the line diagram 54 is obtained by correcting the action value of the first action value function represented by the line diagram 51 to become a value between the maximum value and the minimum value of the action values for the respective actions of the second action value function represented by the line diagram 52.

FIG. 19D is an explanatory diagram of an example of specifying the third action value function by the third action value function specifying unit 43G.

For example, a scene is assumed in which the first action value function is a function represented by the line diagram 51 of FIG. 19A and the second action value function is a function represented by the line diagram 52 of FIG. 19B. Furthermore, a scene is assumed in which the fourth action value function represented by the line diagram 54 illustrated in FIG. 19C is specified by the action value function correction unit 43I.

In this case, the third action value function specifying unit 43G specifies, as the third action value function, the maximum function of the fourth action value function represented by the line diagram 54 and the second action value function represented by the line diagram 52, thereby specifying the third action value function represented by the line diagram 53.

When the action selection unit 41H selects the first action on the basis of the third action value function represented by the line diagram 53 illustrated in FIG. 19D, as a result, the selection probability increases that the action a2 maximizing the action value represented by the second action value function represented by the line diagram 52 is selected as the first action.

Therefore, in this arrangement, it is possible to automatically adjust the reward setting such that the action value represented by the first action value function becomes a value between the maximum value and the minimum value of the action values represented by the second action value function at the initial learning stage, without the user manually adjusting the reward setting.

That is, in the information processing device 10C of this arrangement, the action value function correction unit 43I corrects the first action value function, so that it is possible to determine the first action capable of learning the first inference model while satisfying the minimum required performance regarding the action of the mobile robot 20 for the initial learning stage of the first inference model regardless of the reward setting.

Returning to FIG. 17, the description is continued.

The display control unit 43E is similar to the display control unit 41E of the above-described arrangement except that the display control unit 43E can further display the input screen of the adjustment value and the display screen 69 on the display unit 46.

Incidentally, as described in the above-described arrangement, by using the reward in the current state and the first action, the first action value function specifying unit 40B learns the first inference model by reinforcement learning such that the reward is maximized. That is, the first action value function specifying unit 40B learns the first inference model by reinforcement learning by using the current state of the mobile robot 20 acquired by the acquisition unit 40A, the reward, and the first action of the mobile robot 20 used for calculation of the reward.

In this arrangement, the first action value function specifying unit 40B preferably learns the first inference model by reinforcement learning by using the first action when the specific fourth action value function of the third action value function is used.

In a case where the first action value function specifying unit 40B uses DQN as an algorithm used for learning of the first inference model, it is sufficient that a loss function L represented by the following Formula (8) is used instead of the loss function L expressed by Formula (1) described in the above-described arrangement. Then, similarly to the above-described arrangement, it is sufficient that the first action value function specifying unit 40B determines the update amount of each of the plurality of parameters included in the first inference model by performing back propagation by using the loss function L.

$$L = (r_t + \gamma \max\{Q_4(s_{t+1}, a_{t+1})\} - Q_4(s_t, a_t))^2$$

Formula (8)

In Formula (8), L, $r_t$, $\gamma$, $s_t$, and $a_t$ are similar to those in the above Formula (1). $Q_4$ $(s_{t+1},a_{t+1})$ represents the fourth action value function at the next time t+1. $Q_4(s_t, a_t)$ represents the fourth action value function at the time t. $s_t$ represents the current state s at the time t. $a_t$ represents an action at the time t.

Next, an example of a flow of the information processing executed by the information processing device 10C of this arrangement will be described.

FIG. 20 is a flowchart illustrating an example of the flow of the information processing executed by the information processing device 10C of this arrangement.

The information processing device 10C executes processing of Steps S400 to S408 in a similar manner to Steps S300 to S308 (see FIG. 16) of the above-described arrangement.

Specifically, the acquisition unit 40A acquires the current state of the mobile robot 20 (Step S400). Next, the acquisition unit 40A calculates the reward in the current state acquired in Step S400 (Step S402). The first action value function specifying unit 40B learns the first inference model by reinforcement learning to output the first action value function which has a higher reward and can be obtained in the current state by using the current state acquired in Step S400 and the reward calculated in Step S402 (Step S404). The first action value function specifying unit 40B specifies the first action value function by inputting the current state acquired in Step S400 to the first inference model subjected to the reinforcement learning in Step S304 (Step S406). The second action value function specifying unit 40C specifies the second action value function by inputting the current state acquired in Step S400 to the second inference model (Step S408).

Next, the action value function correction unit 43I of the action determination unit 43D specifies the fourth action value function obtained by correcting the first action value function specified in Step S406 by using the second action value function specified in Step S408 (Step S410) .

Next, the third action value function specifying unit 43G of the action determination unit 43D specifies, as the third action value function, the maximum function of the fourth action value function specified in Step S410 and the second action value function specified in Step S408 (Step S412).

The action selection unit 41H selects the first action on the basis of the third action value function specified in Step S412 (Step S414) .

The transmission control unit 40F transmits the first action selected in Step S414 to the mobile robot 20 (Step S416). The display control unit 43E displays the display screen 70 on the display unit 46 (Step S418).

The control unit 43 determines whether or not to end the processing (Step S420). It is sufficient that the control unit 43 determines whether or not to end the processing in a similar manner to Step S120 (see FIG. 8) of the above-described arrangement. When a negative determination is made in Step S420 (Step S420: No), the process returns to Step S400. When an affirmative determination is made in Step S420 (Step S420: Yes), this routine is ended.

As described above, the action determination unit 43D of the information processing device 10C of this arrangement includes the action value function correction unit 43I. The action value function correction unit 43I specifies the fourth action value function obtained by correcting the first action value function on the basis of the second action value function. The third action value function specifying unit 43G specifies, as the third action value function, the maximum function of the fourth action value function and the second action value function.

Therefore, in addition to the effects of the above-described arrangement, the information processing device 10C of this arrangement can determine the first action capable of learning the first inference model while satisfying the minimum required performance regarding the action of the mobile robot 20 for the initial learning stage of the first inference model regardless of the reward setting.

## Modification

Incidentally, in the first to third arrangements, a mode that the information processing device 10 includes one second action value function specifying unit 40C has been described as an example. That is, in the above-described arrangements, a mode that each of the action determination unit 40D, the action determination unit 41D, and the action determination unit 43D specifies the third action value function by using one second action value function output from one second inference model has been described as an example.

However, the information processing device 10 may be configured to include a plurality of second action value function specifying units 40C. In other words, the information processing device 10 may specify the third action value function by using a plurality of second action value functions output from a plurality of second inference models different from each other.

In this case, it is sufficient that the action determination unit 40D, the action determination unit 41D, and the action determination unit 43D specify the third action value function in a similar manner to the above-described arrangements by using any one second action value function among the second action value functions respectively output from the plurality of second inference models.

Next, an example of a hardware configuration of the information processing device 10 (the information processing device 10A, the information processing device 10B, and the information processing device 10C), the mobile robot 20, and the operation management system 30 of the above-described arrangements will be described.

FIG. 21 is a hardware configuration diagram of an example of the information processing device 10, the mobile robot 20, and the operation management system 30 of the above-described arrangements.

The information processing device 10, the mobile robot 20, and the operation management system 30 of the above-described arrangements have a hardware configuration using a normal computer. In the hardware configuration, a central processing unit (CPU) 86, a read only memory (ROM) 88, a random access memory (RAM) 90, an I/F unit 82, an output unit 80, an HDD 92, and an input unit 94 are connected to one another by a bus 96.

The CPU 86 is an arithmetic device that controls the information processing device 10, the mobile robot 20, and the operation management system 30 of the above-described arrangements. The ROM 88 stores a program or the like that realizes information processing by the CPU 86. The RAM 90 stores data necessary for various processes by the CPU 86. The I/F unit 82 is an interface for connecting to the storage unit 42, the input unit 44, the display unit 46, the communication unit 48, the communication unit 24, the sensor 26, the storage unit 28, and the like to transmit and receive data.

In the information processing device 10, the mobile robot 20, and the operation management system 30 of the above-described arrangements, the CPU 86 reads a program from the ROM 88 onto the RAM 90 and executes the program, whereby the above functions are realized on the computer.

Incidentally, a program for executing each of the above-described processes executed by the information processing device 10, the mobile robot 20, and the operation management system 30 of the above-described arrangements may be stored on a hard disk drive (HDD). Furthermore, the program for executing each of the above-described processes executed by the information processing device 10, the mobile robot 20, and the operation management system 30 of the above-described arrangements may be provided by being incorporated in the ROM 88 in advance.

The programs for executing the above-described processes executed by the information processing device 10, the mobile robot 20, and the operation management system 30 according to the above-described arrangements may be stored as a file in an installable format or an executable format on a computer-readable storage medium such as a CD-ROM, a CD-R, a memory card, a digital versatile disk (DVD), or a flexible disk (FD) and provided as a computer program product. Furthermore, the program for executing the above-described information processing executed by the information processing device 10, the mobile robot 20, and the operation management system 30 of the above-described arrangements may be stored on a computer connected to a network such as the Internet and provided by being downloaded via the network. Furthermore, the program for executing the above-described information processing executed by the information processing device 10, the mobile robot 20, and the operation management system 30 of the above-described arrangements may be provided or distributed via a network such as the Internet.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. According to an arrangement, an information processing device includes an acquisition unit (40A), a first action value function specifying unit (40B), a second action value function specifying unit (40C), and an action determination unit (40D). The acquisition unit (40A) acquires a current state of a device. The first action value function specifying unit (40B) has a function of learning a first inference model by reinforcement learning, and specifies a first action value function of the device on a basis of the current state and the first inference model. The second action value function specifying unit (40C) specifies a second action value function of the device on a basis of the current state and a second inference model that is not a parameter update target. The action determination unit (40D) determines a first action of the device on a basis of the first action value function and the second action value function.

Example 2. In the information processing device according to example 1, the action determination unit (40D) selects, as a third action value function, any one of the first action value function and the second action value function, and determines the first action on a basis of the selected third action value function.

Example 3. In the information processing device according to example 2, the action determination unit (40D) changes a first selection probability of selecting the first action value function as the third action value function and a second selection probability of selecting the second action value function as the third action value function according to a learning time of the first inference model; decreases the first selection probability and increases the second selection probability as the learning time is shortened; and increases the first selection probability and decreases the second selection probability as the learning time is lengthened.

Example 4. In the information processing device according to example 1, the action determination unit (40D) includes a third action value function specifying unit (41G) that specifies a third action value function obtained by synthesizing the first action value function and the second action value function, and an action selection unit (41H) that selects the first action on a basis of the third action value function.

Example 5. In the information processing device according to example 4, the third action value function specifying unit (41G) specifies, as the third action value function, a maximum function of the first action value function and the second action value function.

Example 6. In the information processing device according to example 4, the action determination unit (40D) includes an action value function correction unit (43I) that specifies a fourth action value function obtained by correcting the first action value function on a basis of the second action value function; and the third action value function specifying unit (41G) specifies, as the third action value function, a maximum function of the fourth action value function and the second action value function.

Example 7. In the information processing device according to example 6, the action value function correction unit (43I) specifies the fourth action value function obtained by correcting the first action value function such that an action value for an action represented by the first action value function becomes a value between a maximum value and a minimum value of action values for actions represented by the second action value function.

Example 8. In the information processing device according to example 6, the action value function correction unit (43I) specifies the fourth action value function obtained by correcting the first action value function such that a second selection probability of selecting the second action value function as the third action value function at start of learning of the first inference model becomes a predetermined selection probability.

Example 9. In the information processing device according to example 8, the action value function correction unit (43I) specifies the fourth action value function obtained by correcting the first action value function so as to become a selection probability input by a user.

Example 10. In the information processing device according to example 7, the action value function correction unit (43I) specifies the fourth action value function obtained by correcting the first action value function such that an action value for an action represented by the first action value function becomes a value that is input by a user and that is between a maximum value and a minimum value of action values for actions represented by the second action value function.

Example 11. In the information processing device according to example 6, the first action value function specifying unit (40B) learns the first inference model by reinforcement learning by using the current state, a reward in the current state, and the first action, and learns the first inference model by reinforcement learning by using the first action when the fourth action value function is used to specify the third action value function.

Example 12. In the information processing device according to example 1, the second inference model performs learning in advance on a basis of the current state and data of an action of the device based on a first rule.

Example 13. The information processing device according to example 1 further includes a plurality of the second action value function specifying units (40C).

Example 14. The information processing device according to example 1 further includes a display control unit (40E) that displays, on a display unit, information indicating at least one of a progress of learning of the first inference model, a selection probability of the action determination unit (40D) selecting at least one of the first action value function and the second action value function, a number of times of selection of the action determination unit (40D) selecting at least one of the first action value function and the second action value function, whether the first action is an action that maximizes an action value represented by one of the first action value function and the second action value function, a selection probability that an action that maximizes an action value represented by the second action value function is selected as the first action, and a transition of the selection probability.

Example 15. According to an arrangement, an information processing method is implemented by a computer and includes acquiring a current state of a device; learning a first inference model by reinforcement learning and specifying a first action value function of the device on a basis of the current state and the first inference model; specifying a second action value function of the device on a basis of the current state and a second inference model that is not a parameter update target; and determining a first action of the device on a basis of the first action value function and the second action value function.

Example 16. According to an arrangement, an information processing computer program product has a computer readable medium including programmed instructions stored thereon. When executed by a computer, the instructions cause the computer to perform acquiring a current state of a device; learning a first inference model by reinforcement learning and specifying a first action value function of the device on a basis of the current state and the first inference model; specifying a second action value function of the device on a basis of the current state and a second inference model that is not a parameter update target; and determining a first action of the device on a basis of the first action value function and the second action value function.

## Claims

1. An information processing device comprising:

    an acquisition unit (40A) that acquires a current state of a device;
    a first action value function specifying unit (40B) that has a function of learning a first inference model by reinforcement learning, and specifies a first action value function of the device on a basis of the current state and the first inference model;
    a second action value function specifying unit (40C) that specifies a second action value function of the device on a basis of the current state and a second inference model that is not a parameter update target; and
    an action determination unit (40D) that determines a first action of the device on a basis of the first action value function and the second action value function.

2. The information processing device according to claim 1, wherein
the action determination unit (40D) selects, as a third action value function, any one of the first action value function and the second action value function, and determines the first action on a basis of the selected third action value function.

3. The information processing device according to claim 2, wherein

    the action determination unit (40D)
    changes a first selection probability of selecting the first action value function as the third action value function and a second selection probability of selecting the second action value function as the third action value function according to a learning time of the first inference model,
    decreases the first selection probability and increases the second selection probability as the learning time is shortened, and
    increases the first selection probability and decreases the second selection probability as the learning time is lengthened.

4. The information processing device according to claim 1, wherein

    the action determination unit (40D) includes
    a third action value function specifying unit (41G) that specifies a third action value function obtained by synthesizing the first action value function and the second action value function, and
    an action selection unit (41H) that selects the first action on a basis of the third action value function.

5. The information processing device according to claim 4, wherein
the third action value function specifying unit (41G) specifies, as the third action value function, a maximum function of the first action value function and the second action value function.

6. The information processing device according to claim 4, wherein

    the action determination unit (40D) includes an action value function correction unit (43I) that specifies a fourth action value function obtained by correcting the first action value function on a basis of the second action value function, and
    the third action value function specifying unit (41G) specifies, as the third action value function, a maximum function of the fourth action value function and the second action value function.

7. The information processing device according to claim 6, wherein

the action value function correction unit (43I) specifies the fourth action value function obtained by correcting the first action value function such that an action value for an action represented by the first action value function becomes a value between a maximum value and a minimum value of action values for actions represented by the second action value function.

**8.** The information processing device according to claim 6, wherein
the action value function correction unit (43I) specifies the fourth action value function obtained by correcting the first action value function such that a second selection probability of selecting the second action value function as the third action value function at start of learning of the first inference model becomes a predetermined selection probability.

**9.** The information processing device according to claim 8, wherein
the action value function correction unit (43I) specifies the fourth action value function obtained by correcting the first action value function so as to become a selection probability input by a user.

**10.** The information processing device according to claim 7, wherein
the action value function correction unit (43I) specifies the fourth action value function obtained by correcting the first action value function such that an action value for an action represented by the first action value function becomes a value that is input by a user and that is between a maximum value and a minimum value of action values for actions represented by the second action value function.

**11.** The information processing device according to claim 6, wherein

the first action value function specifying unit (40B) learns the first inference model by reinforcement learning by using the current state, a reward in the current state, and the first action, and
learns the first inference model by reinforcement learning by using the first action when the fourth action value function is used to specify the third action value function.

**12.** The information processing device according to claim 1, wherein
the second inference model performs learning in advance on a basis of the current state and data of an action of the device based on a first rule.

**13.** The information processing device according to claim 1, further comprising:
a plurality of the second action value function specifying units (40C).

**14.** The information processing device according to claim 1, further comprising:
a display control unit (40E) that displays, on a display unit, information indicating at least one of a progress of learning of the first inference model, a selection probability of the action determination unit (40D) selecting at least one of the first action value function and the second action value function, a number of times of selection of the action determination unit (40D) selecting at least one of the first action value function and the second action value function, whether the first action is an action that maximizes an action value represented by one of the first action value function and the second action value function, a selection probability that an action that maximizes an action value represented by the second action value function is selected as the first action, and a transition of the selection probability.

**15.** An information processing method implemented by a computer, the method comprising:

acquiring a current state of a device;
learning a first inference model by reinforcement learning and specifying a first action value function of the device on a basis of the current state and the first inference model;
specifying a second action value function of the device on a basis of the current state and a second inference model that is not a parameter update target; and
determining a first action of the device on a basis of the first action value function and the second action value function.

**16.** An information processing computer program product having a computer readable medium including programmed instructions stored thereon, wherein the instructions, when executed by a computer, cause the computer to perform:

acquiring a current state of a device;
learning a first inference model by reinforcement learning and specifying a first action value function of the device on a basis of the current state and the first inference model;
specifying a second action value function of the device on a basis of the current state and a second inference model that is not a parameter update target; and
determining a first action of the device on a basis of the first action value function and the second action value function.

FIG.1

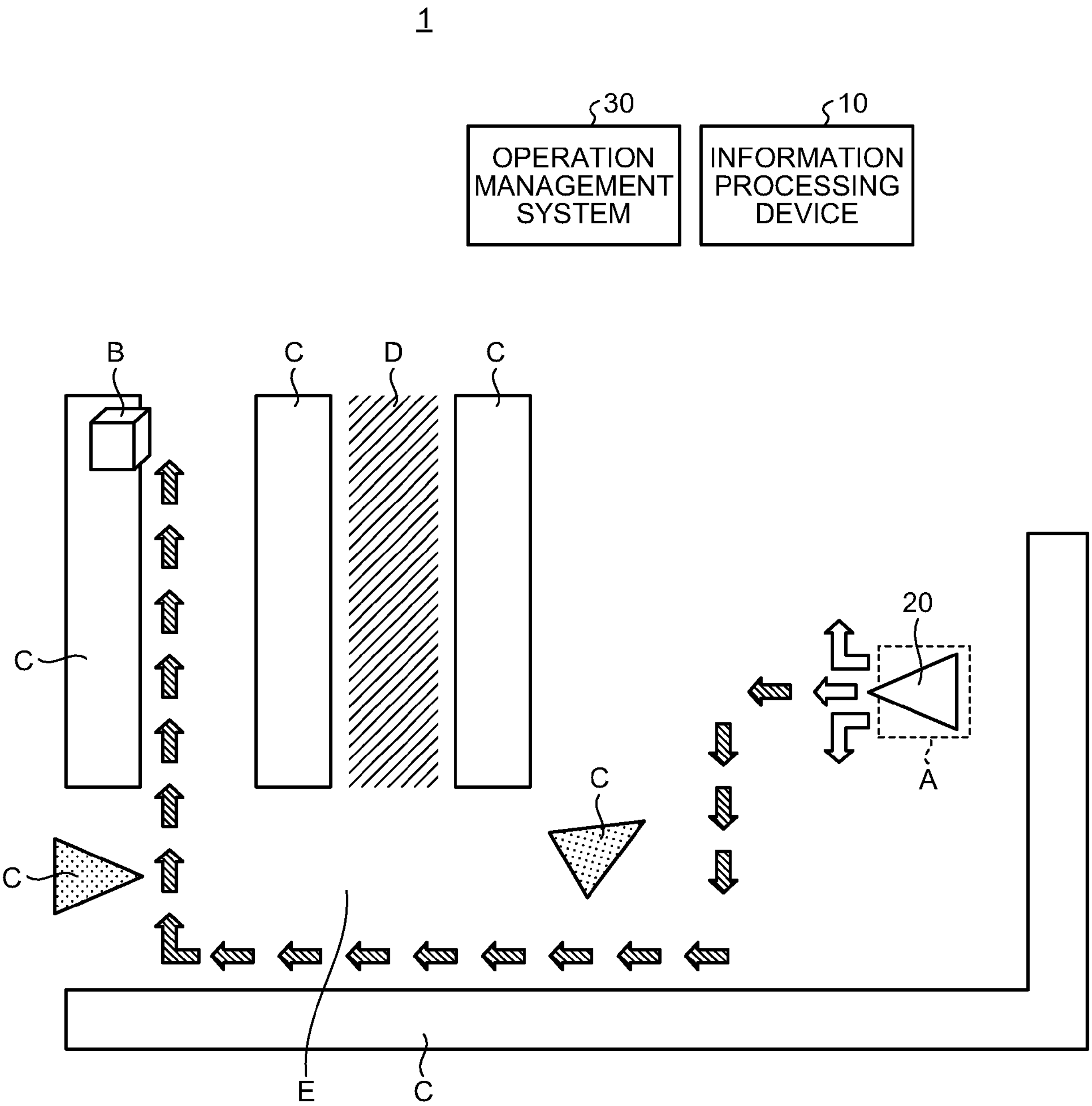
1
30
OPERATION MANAGEMENT SYSTEM
10
INFORMATION PROCESSING DEVICE
B
C
D
C
20
C
A
C
C
E
C

FIG.2

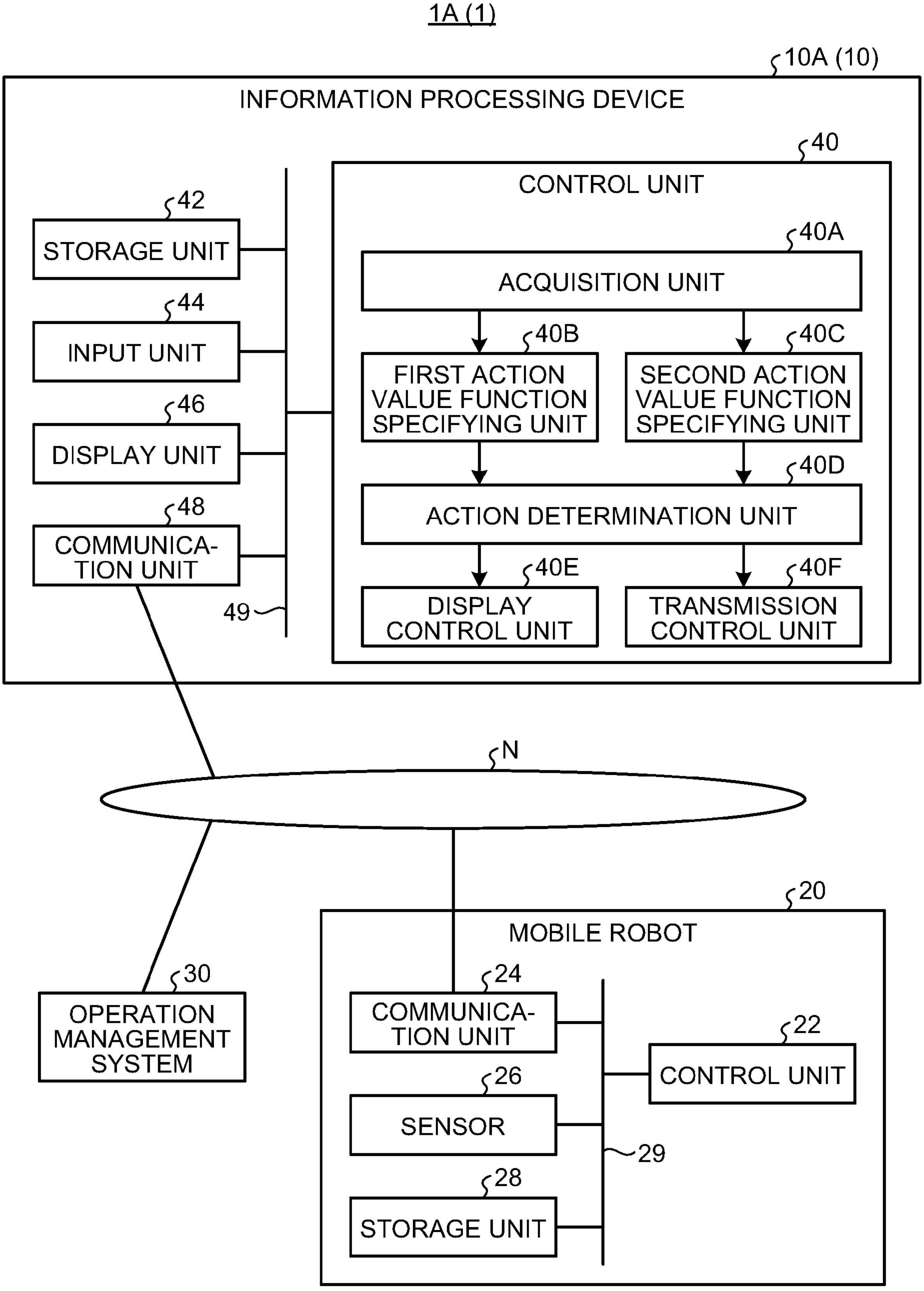
1A (1)
10A (10)
INFORMATION PROCESSING DEVICE
40
CONTROL UNIT
42
STORAGE UNIT
40A
ACQUISITION UNIT
44
INPUT UNIT
40B
40C
FIRST ACTION VALUE FUNCTION SPECIFYING UNIT
SECOND ACTION VALUE FUNCTION SPECIFYING UNIT
46
DISPLAY UNIT
40D
48
ACTION DETERMINATION UNIT
COMMUNICATION UNIT
40E
40F
49
DISPLAY CONTROL UNIT
TRANSMISSION CONTROL UNIT
N
20
MOBILE ROBOT
30
24
OPERATION MANAGEMENT SYSTEM
COMMUNICATION UNIT
22
CONTROL UNIT
26
SENSOR
29
28
STORAGE UNIT

# FIG.3A

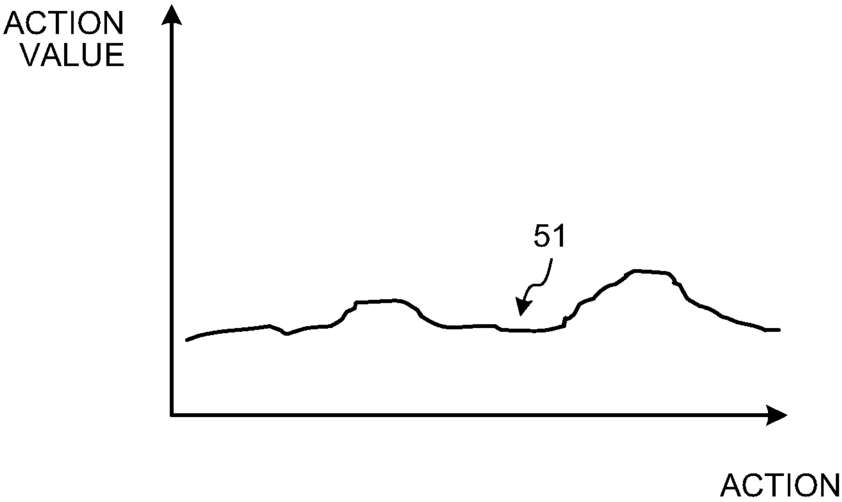


# FIG.3B

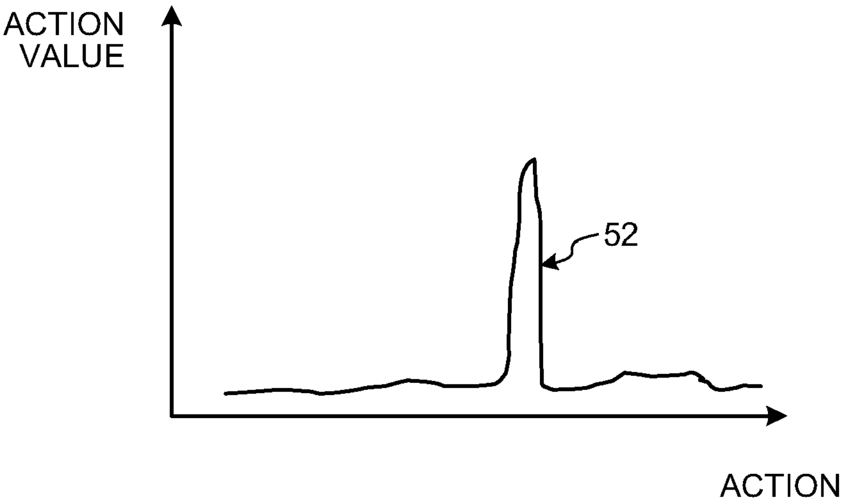

FIG.4

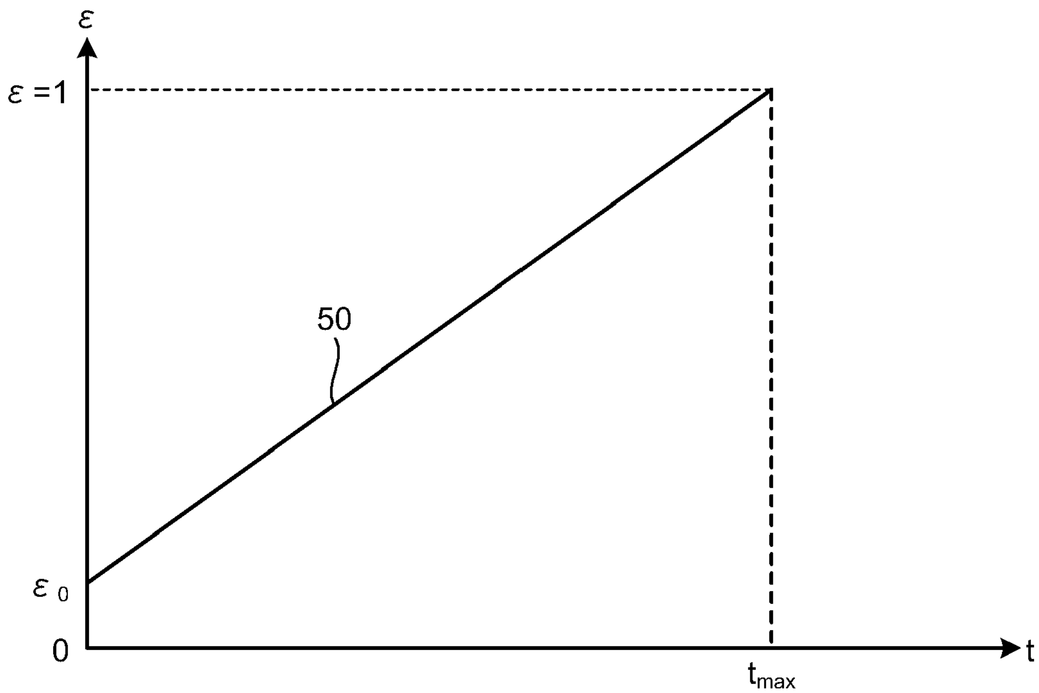

FIG.5

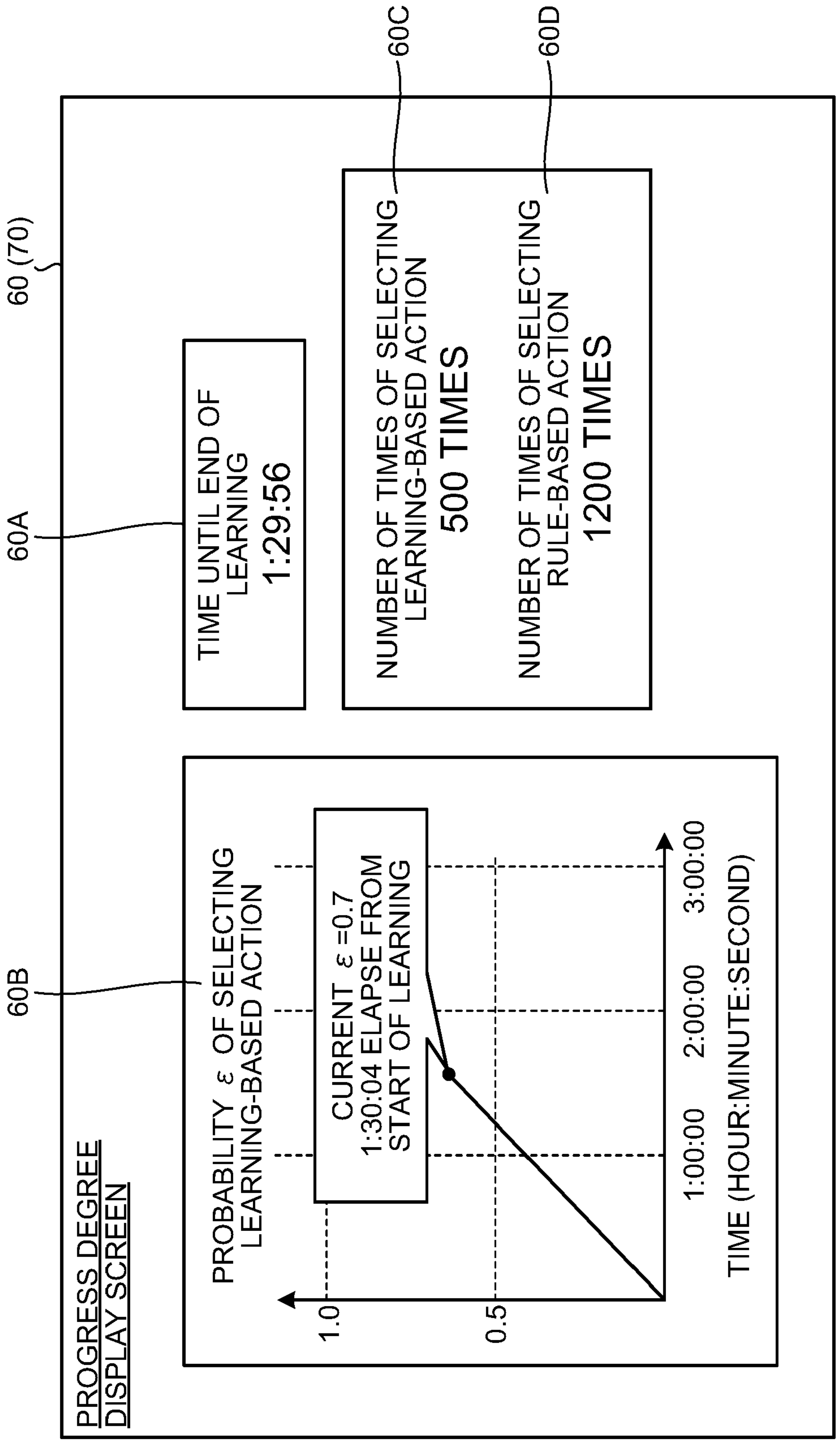
60 (70)
60A
60B
60C
60D
PROGRESS DEGREE DISPLAY SCREEN
TIME UNTIL END OF LEARNING
1:29:56
NUMBER OF TIMES OF SELECTING LEARNING-BASED ACTION
500 TIMES
NUMBER OF TIMES OF SELECTING RULE-BASED ACTION
1200 TIMES
PROBABILITY ε OF SELECTING LEARNING-BASED ACTION
CURRENT ε =0.7
1:30:04 ELAPSE FROM START OF LEARNING
1.0
0.5
1:00:00
2:00:00
3:00:00
TIME (HOUR:MINUTE:SECOND)

FIG.6

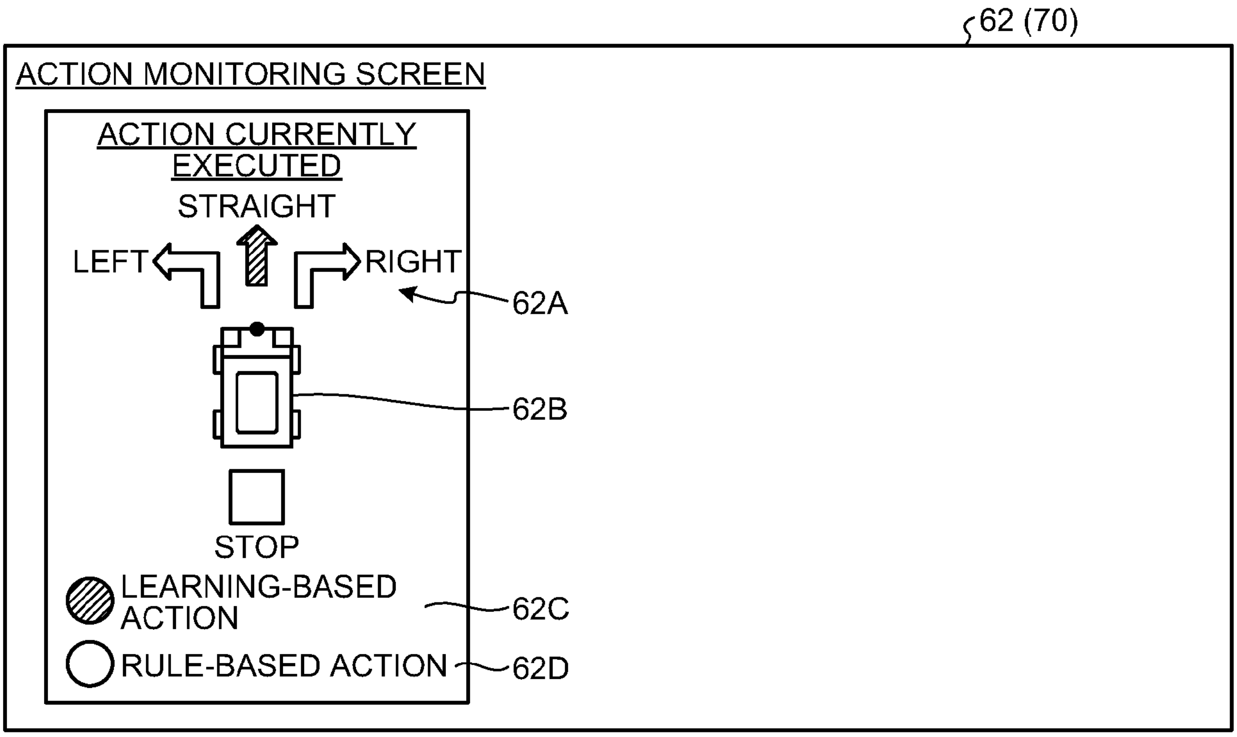
62 (70)
ACTION MONITORING SCREEN
ACTION CURRENTLY EXECUTED
STRAIGHT
LEFT
RIGHT
62A
62B
STOP
LEARNING-BASED ACTION
62C
RULE-BASED ACTION
62D

FIG.7

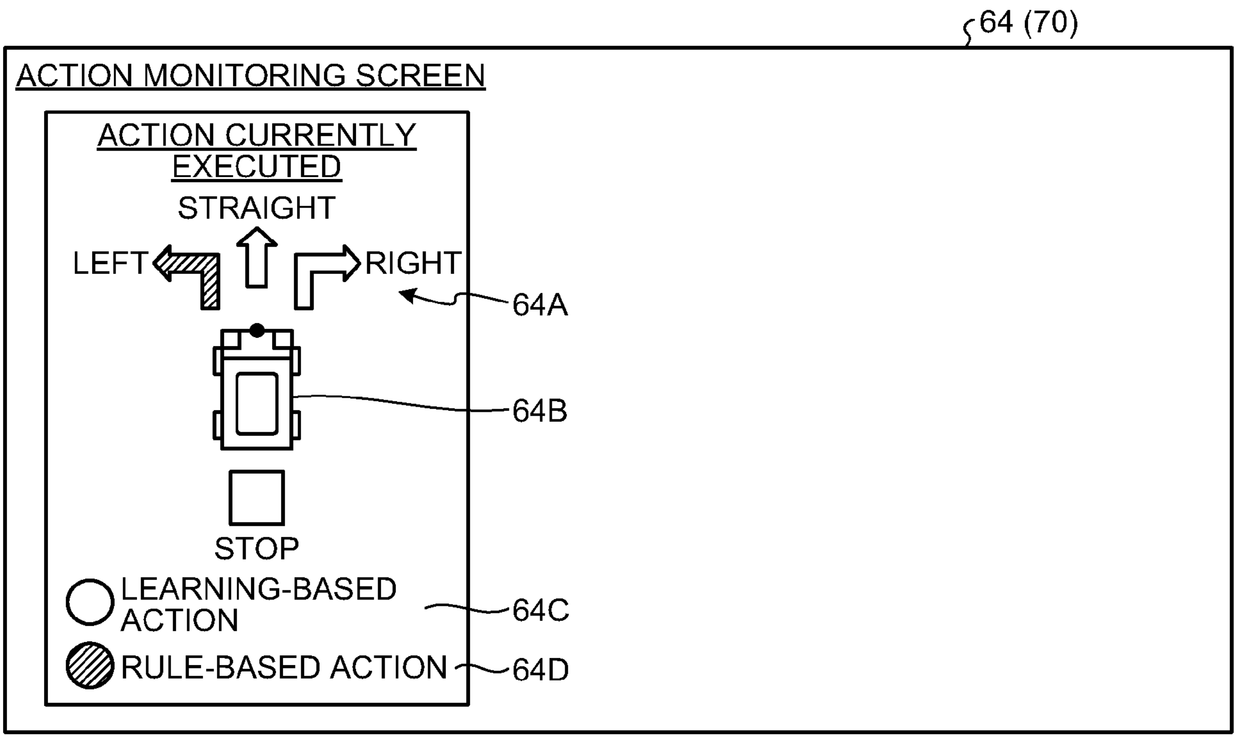
64 (70)
ACTION MONITORING SCREEN
ACTION CURRENTLY EXECUTED
STRAIGHT
LEFT
RIGHT
64A
64B
STOP
LEARNING-BASED ACTION
64C
RULE-BASED ACTION
64D

FIG.8

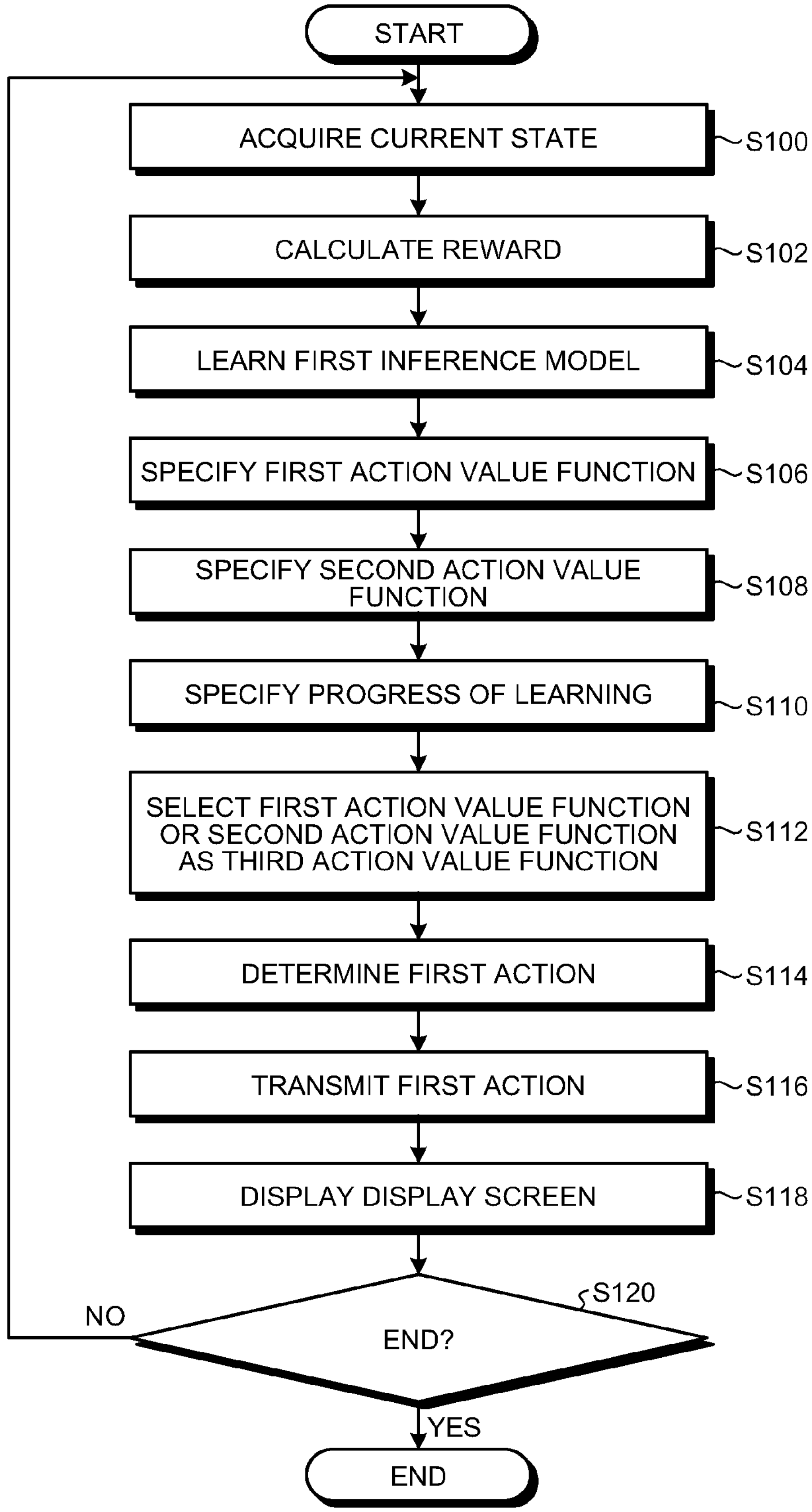
START
ACQUIRE CURRENT STATE
S100
CALCULATE REWARD
S102
LEARN FIRST INFERENCE MODEL
S104
SPECIFY FIRST ACTION VALUE FUNCTION
S106
SPECIFY SECOND ACTION VALUE FUNCTION
S108
SPECIFY PROGRESS OF LEARNING
S110
SELECT FIRST ACTION VALUE FUNCTION OR SECOND ACTION VALUE FUNCTION AS THIRD ACTION VALUE FUNCTION
S112
DETERMINE FIRST ACTION
S114
TRANSMIT FIRST ACTION
S116
DISPLAY DISPLAY SCREEN
S118
S120
NO
END?
YES
END

FIG.9

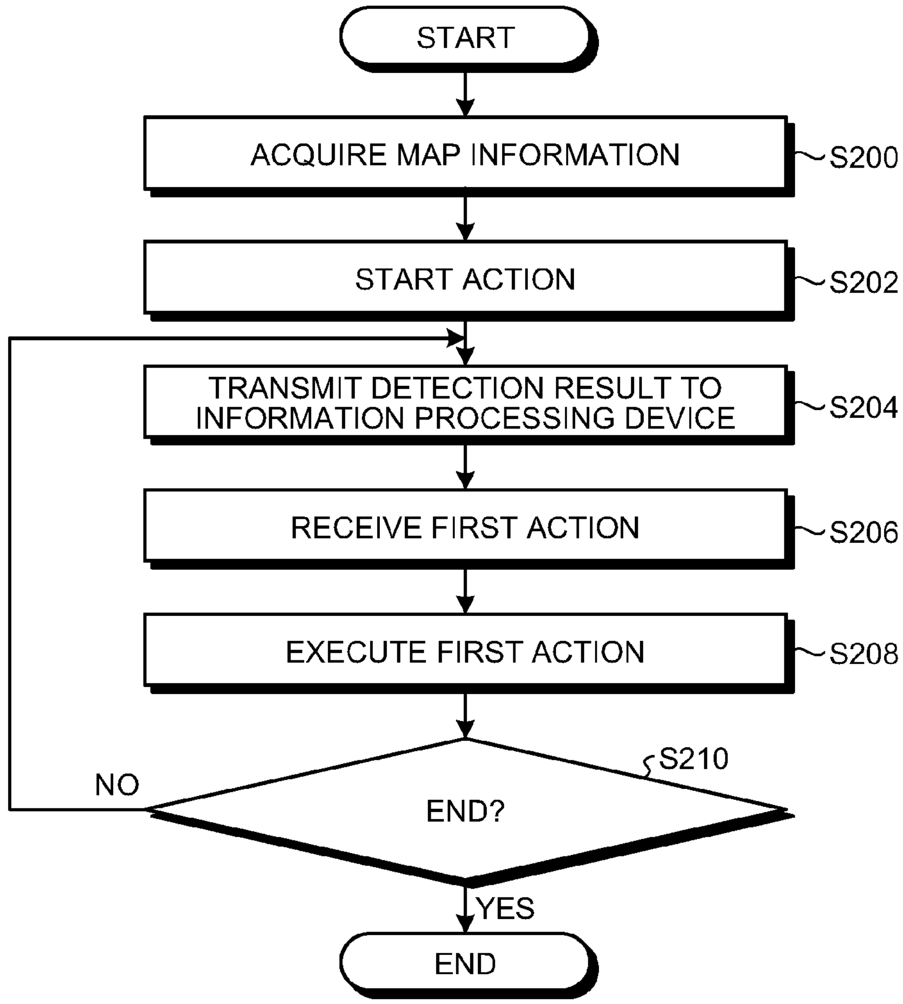
START
ACQUIRE MAP INFORMATION
S200
START ACTION
S202
TRANSMIT DETECTION RESULT TO INFORMATION PROCESSING DEVICE
S204
RECEIVE FIRST ACTION
S206
EXECUTE FIRST ACTION
S208
S210
END?
NO
YES
END

FIG.10

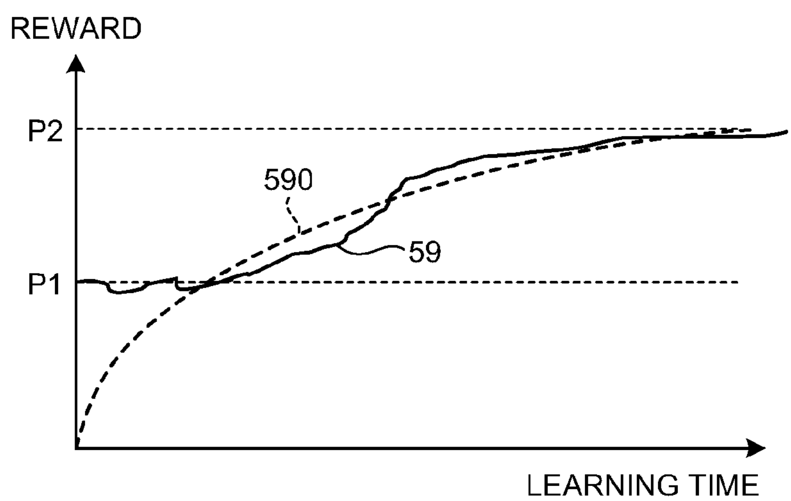
REWARD
P2
P1
590
59
LEARNING TIME

FIG.11

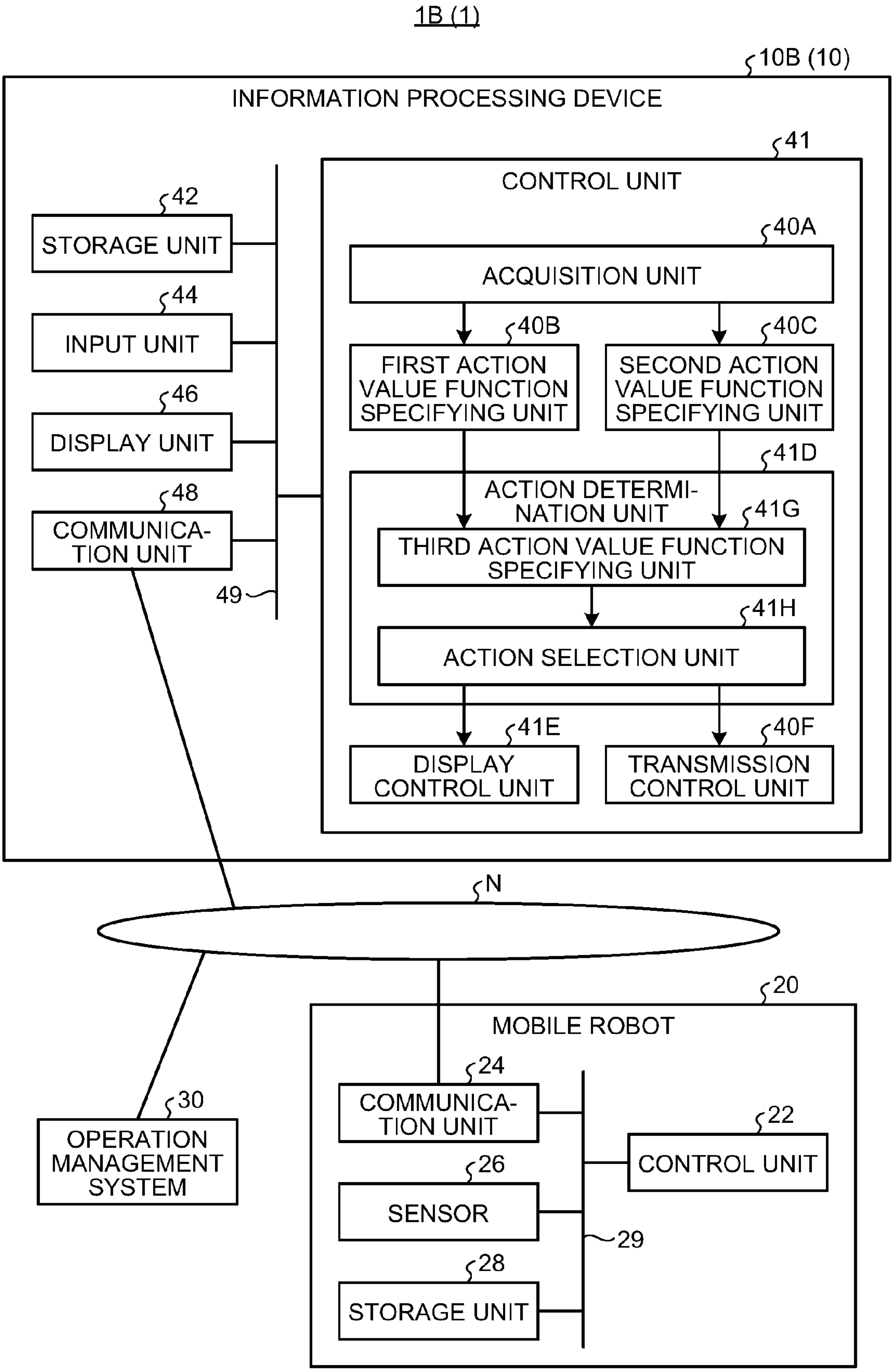
1B (1)
10B (10)
INFORMATION PROCESSING DEVICE
41
CONTROL UNIT
40A
ACQUISITION UNIT
40B
FIRST ACTION VALUE FUNCTION SPECIFYING UNIT
40C
SECOND ACTION VALUE FUNCTION SPECIFYING UNIT
41D
ACTION DETERMINATION UNIT
41G
THIRD ACTION VALUE FUNCTION SPECIFYING UNIT
41H
ACTION SELECTION UNIT
41E
DISPLAY CONTROL UNIT
40F
TRANSMISSION CONTROL UNIT
42
STORAGE UNIT
44
INPUT UNIT
46
DISPLAY UNIT
48
COMMUNICATION UNIT
49
N
20
MOBILE ROBOT
24
COMMUNICATION UNIT
22
CONTROL UNIT
26
SENSOR
29
28
STORAGE UNIT
30
OPERATION MANAGEMENT SYSTEM

FIG.12A

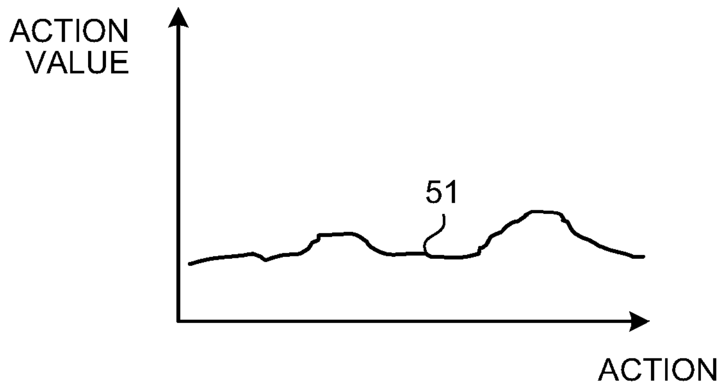


FIG.12B

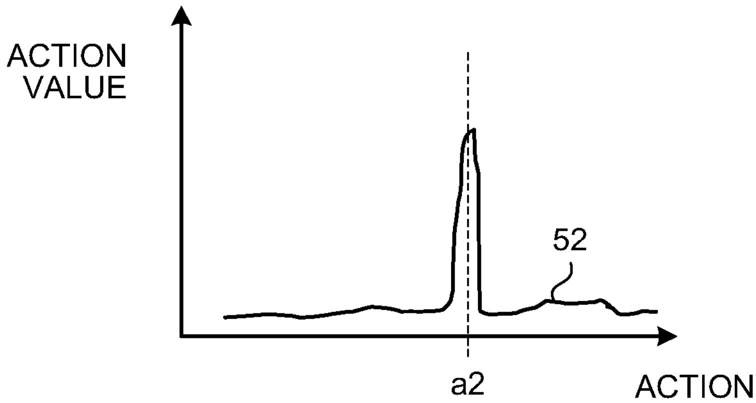


FIG.12C

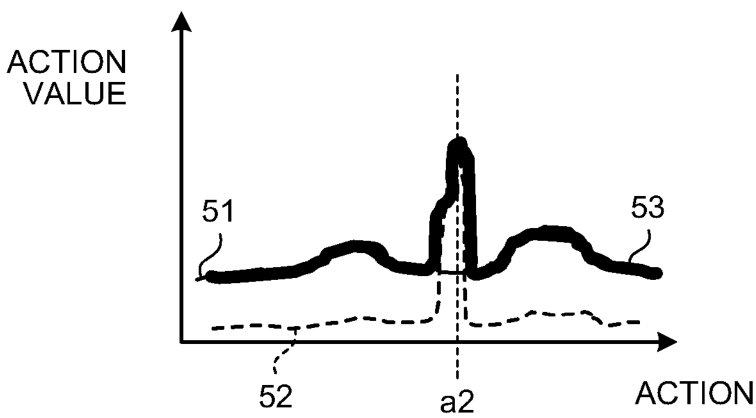

FIG.13A

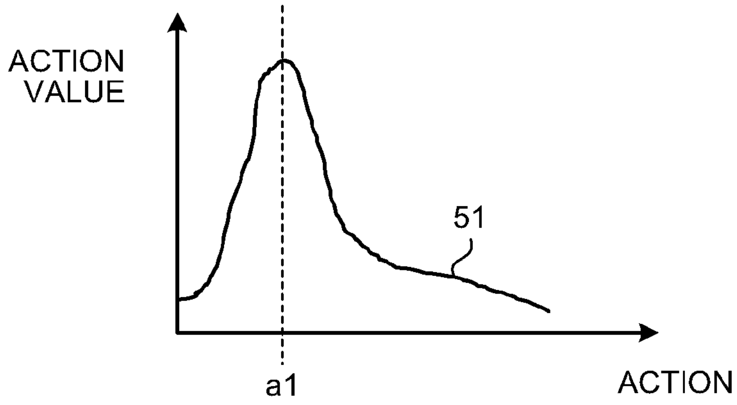


FIG.13B

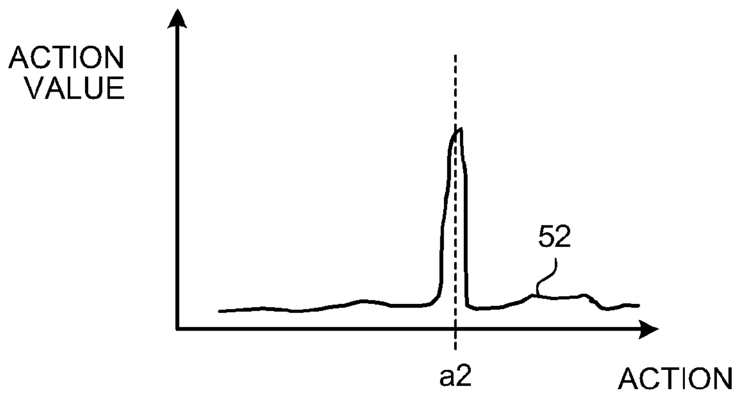


FIG.13C

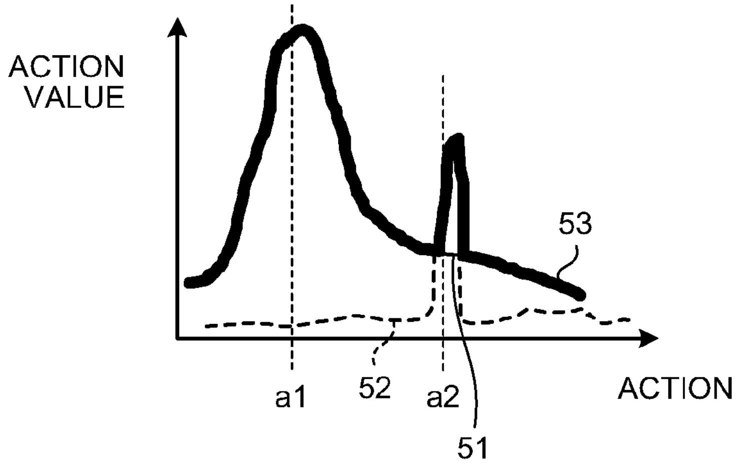

FIG.14

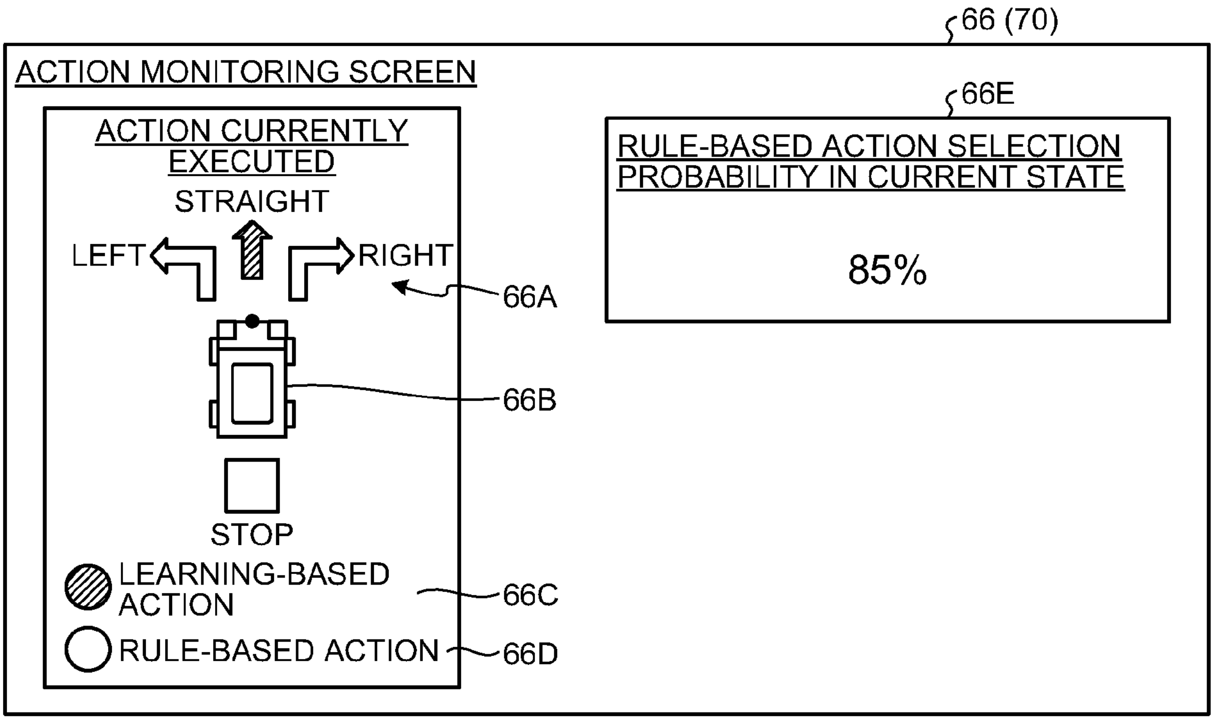
66 (70)
ACTION MONITORING SCREEN
ACTION CURRENTLY EXECUTED
STRAIGHT
LEFT
RIGHT
66A
66B
STOP
LEARNING-BASED ACTION
66C
RULE-BASED ACTION
66D
66E
RULE-BASED ACTION SELECTION PROBABILITY IN CURRENT STATE
85%

FIG.15

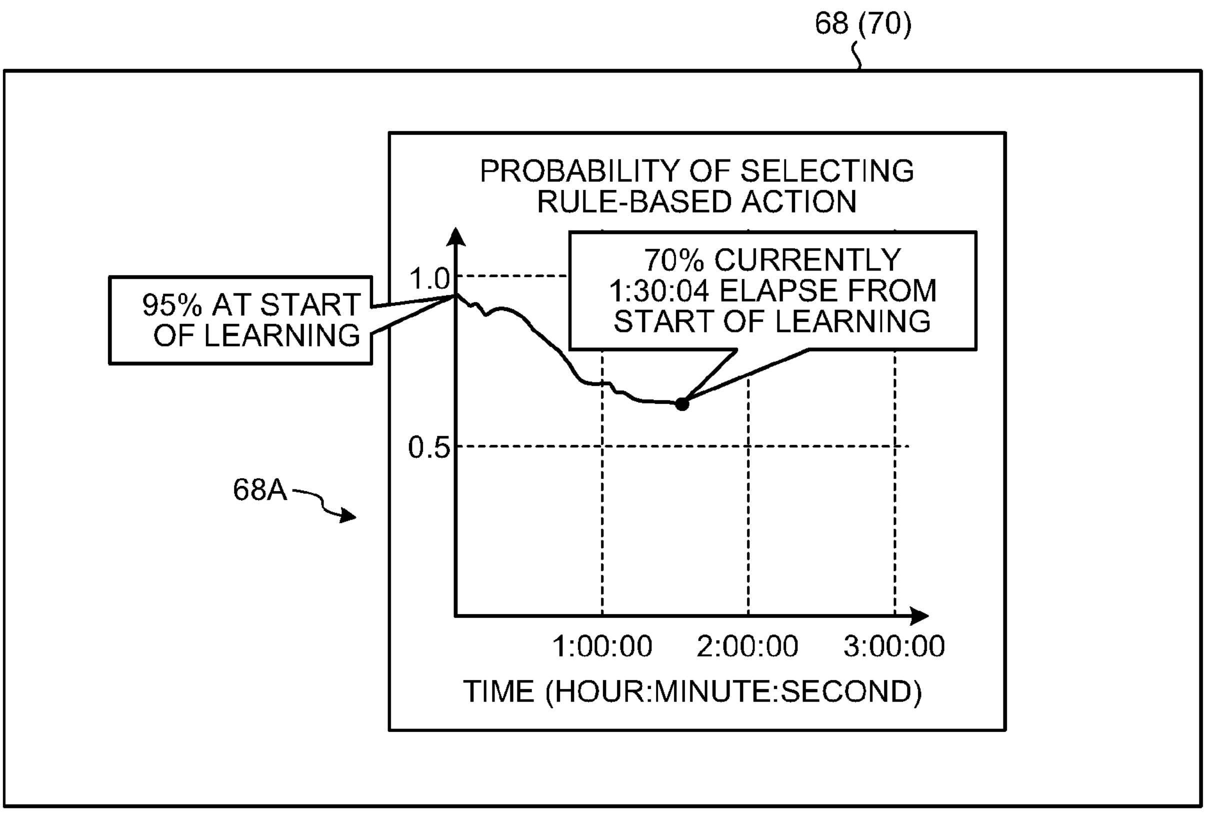
68 (70)
PROBABILITY OF SELECTING RULE-BASED ACTION
95% AT START OF LEARNING
70% CURRENTLY 1:30:04 ELAPSE FROM START OF LEARNING
1.0
0.5
68A
1:00:00
2:00:00
3:00:00
TIME (HOUR:MINUTE:SECOND)

FIG.16

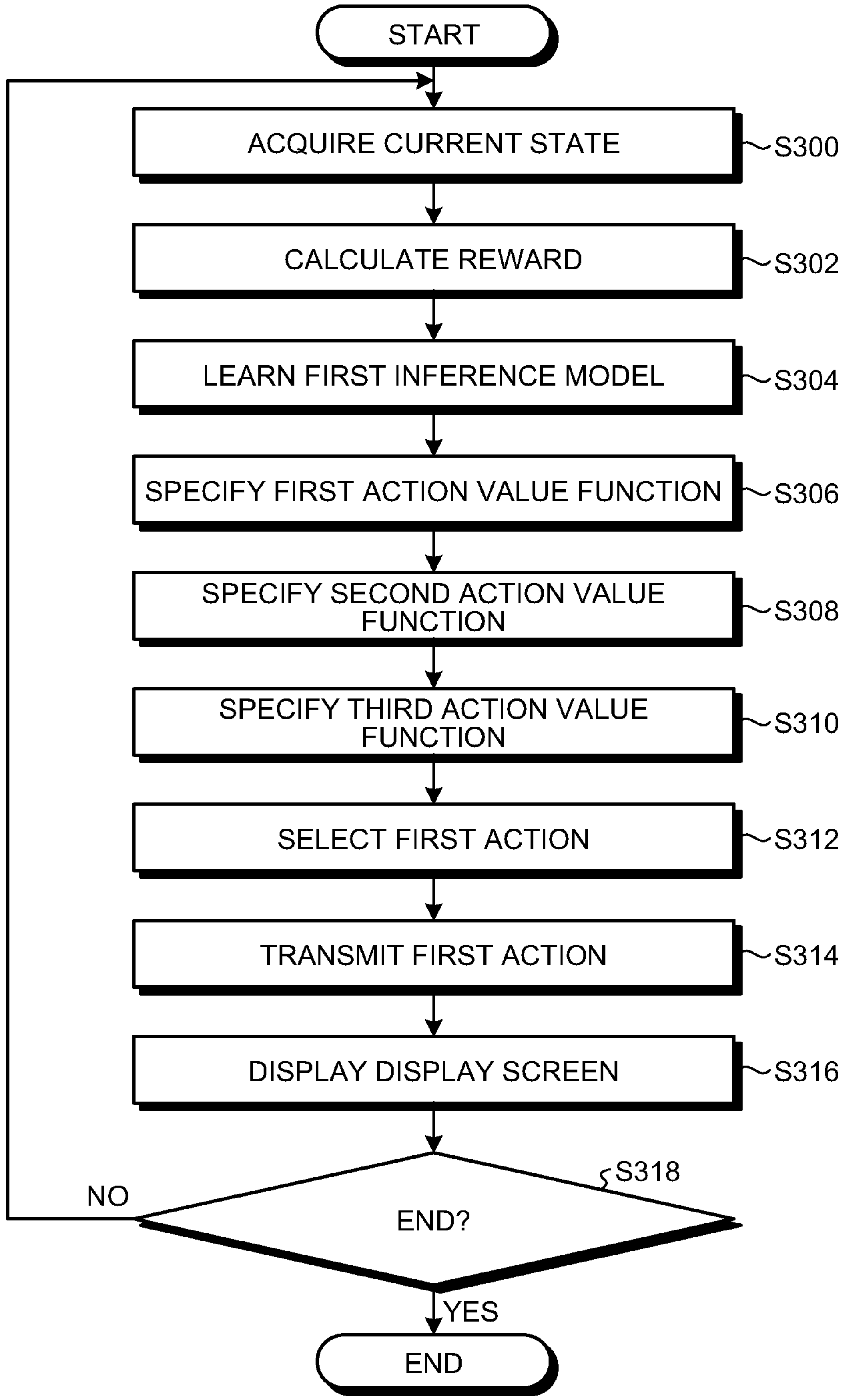
START
ACQUIRE CURRENT STATE
S300
CALCULATE REWARD
S302
LEARN FIRST INFERENCE MODEL
S304
SPECIFY FIRST ACTION VALUE FUNCTION
S306
SPECIFY SECOND ACTION VALUE FUNCTION
S308
SPECIFY THIRD ACTION VALUE FUNCTION
S310
SELECT FIRST ACTION
S312
TRANSMIT FIRST ACTION
S314
DISPLAY DISPLAY SCREEN
S316
END?
S318
NO
YES
END

FIG.17

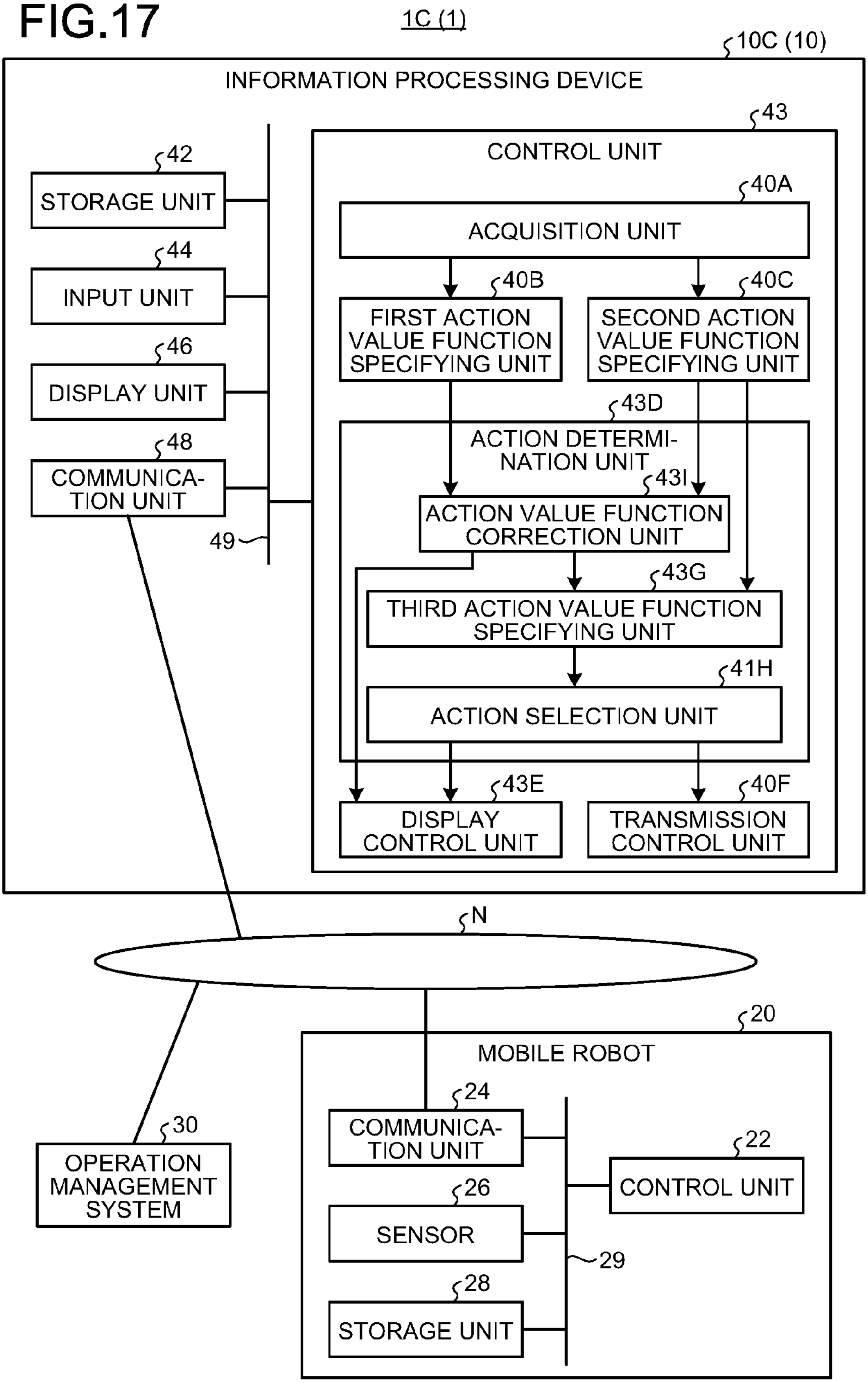
1C (1)
10C (10)
INFORMATION PROCESSING DEVICE
43
CONTROL UNIT
40A
ACQUISITION UNIT
40B
FIRST ACTION VALUE FUNCTION SPECIFYING UNIT
40C
SECOND ACTION VALUE FUNCTION SPECIFYING UNIT
43D
ACTION DETERMI-NATION UNIT
43I
ACTION VALUE FUNCTION CORRECTION UNIT
43G
THIRD ACTION VALUE FUNCTION SPECIFYING UNIT
41H
ACTION SELECTION UNIT
43E
DISPLAY CONTROL UNIT
40F
TRANSMISSION CONTROL UNIT
42
STORAGE UNIT
44
INPUT UNIT
46
DISPLAY UNIT
48
COMMUNICA-TION UNIT
49
N
20
MOBILE ROBOT
24
COMMUNICA-TION UNIT
22
CONTROL UNIT
26
SENSOR
29
28
STORAGE UNIT
30
OPERATION MANAGEMENT SYSTEM

FIG.18

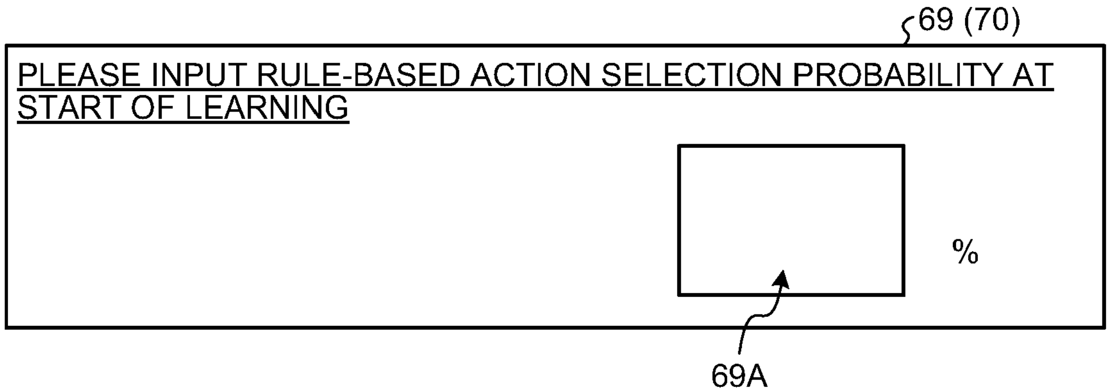
69 (70)
PLEASE INPUT RULE-BASED ACTION SELECTION PROBABILITY AT START OF LEARNING
%
69A

FIG.19A

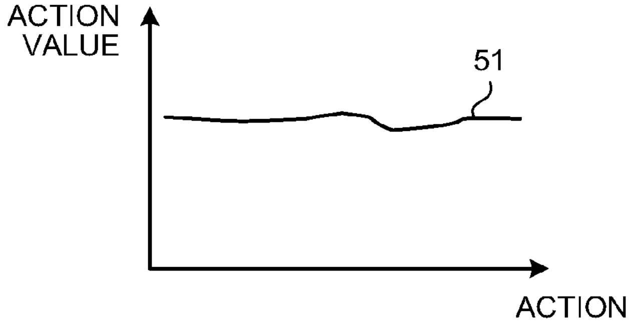


FIG.19B

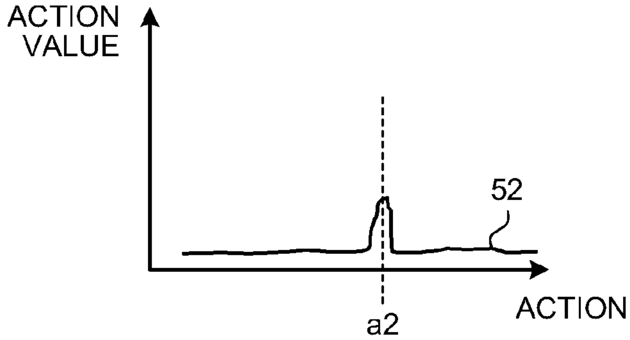


FIG.19C

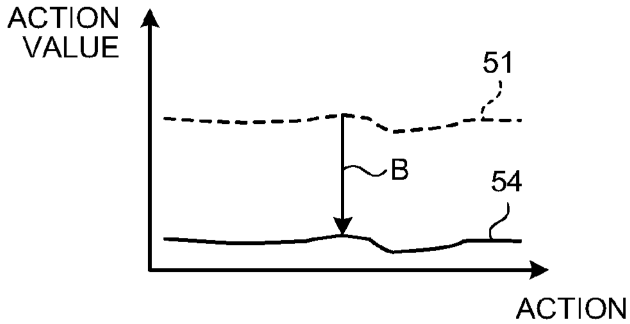


FIG.19D

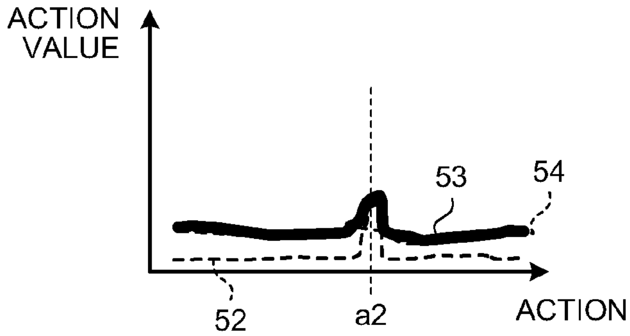

FIG.20

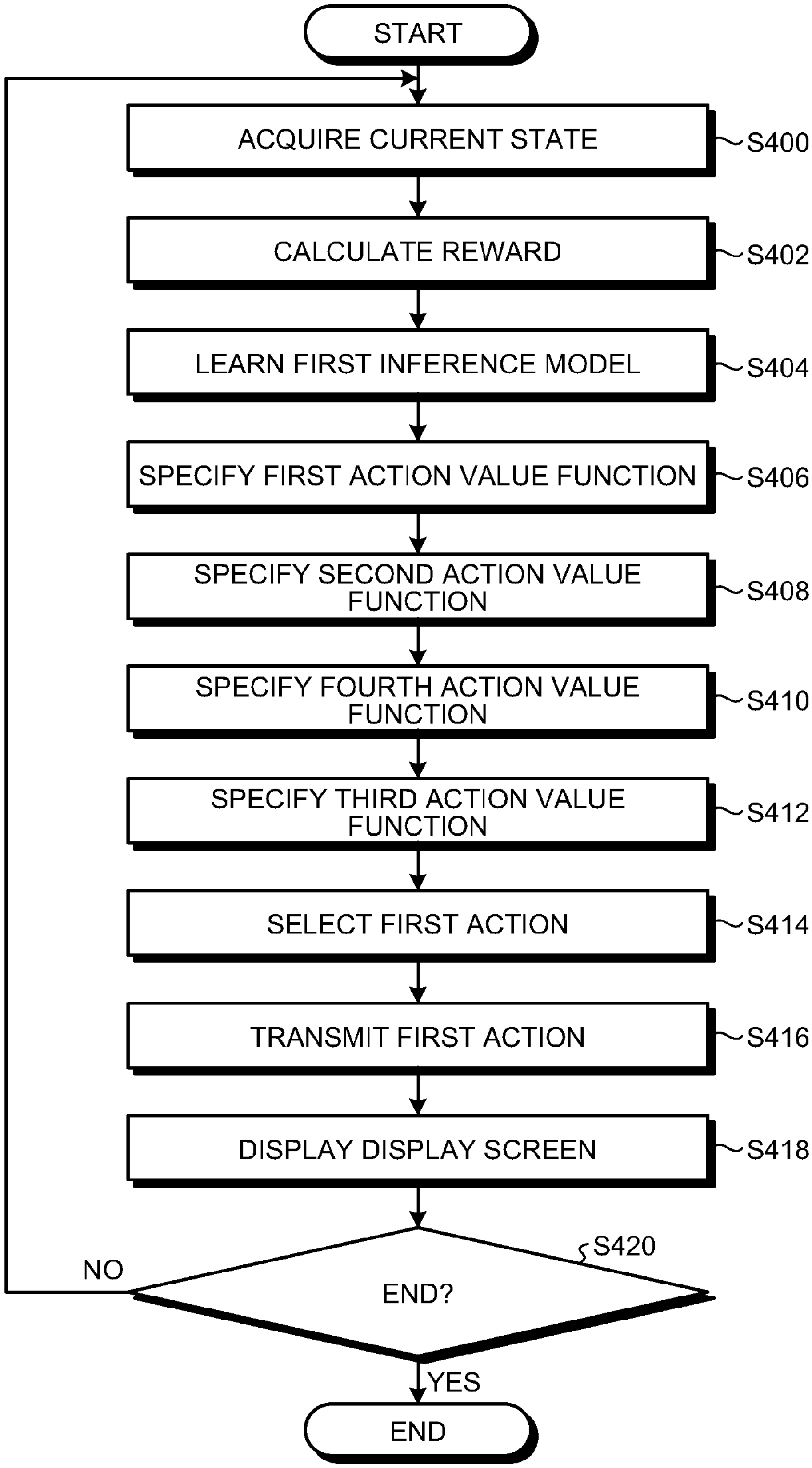
START
ACQUIRE CURRENT STATE
S400
CALCULATE REWARD
S402
LEARN FIRST INFERENCE MODEL
S404
SPECIFY FIRST ACTION VALUE FUNCTION
S406
SPECIFY SECOND ACTION VALUE FUNCTION
S408
SPECIFY FOURTH ACTION VALUE FUNCTION
S410
SPECIFY THIRD ACTION VALUE FUNCTION
S412
SELECT FIRST ACTION
S414
TRANSMIT FIRST ACTION
S416
DISPLAY DISPLAY SCREEN
S418
S420
NO
END?
YES
END

FIG.21

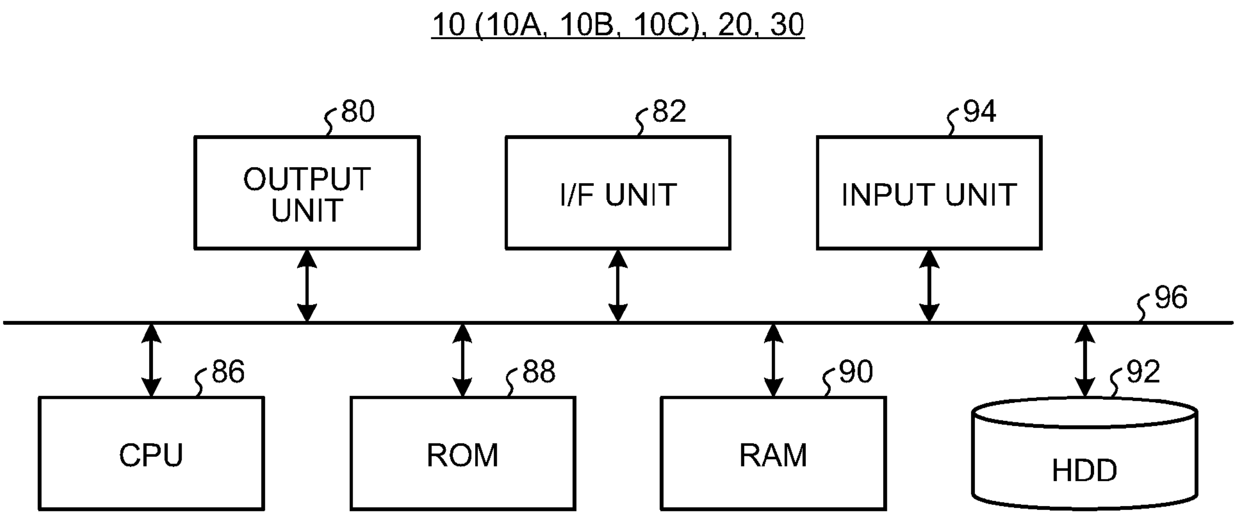
10 (10A, 10B, 10C), 20, 30
80
OUTPUT UNIT
82
I/F UNIT
94
INPUT UNIT
96
86
CPU
88
ROM
90
RAM
92
HDD

Europäisches Patentamt
European Patent Office
Office européen des brevets

# EUROPEAN SEARCH REPORT

Application Number
EP 23 15 7869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZOHREH HAJIAKHONDI-MEYBODI ET AL: "JUNO: Jump-Start Reinforcement Learning-based Node Selection for UWB Indoor Localization", ARXIV.ORG, CORNELL UNIVERSITY LIBRARY, 201 OLIN LIBRARY CORNELL UNIVERSITY ITHACA, NY 14853, 6 May 2022 (2022-05-06), XP091227602, * figure 1 * * sections I-V * ----- | 1-16 | INV. G06N3/092 G06N3/042 G06N3/045 G06N3/084 G06N5/01 ADD. G06N7/01 |
| | | | TECHNICAL FIELDS SEARCHED (IPC) |
| | | | G06N |

The present search report has been drawn up for all claims

1

| Place of search | Date of completion of the search | Examiner |
|---|---|---|
| The Hague | 25 September 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)